# EUROPÄISCHE PATENTSCHRIFT

(11) **EP 1 866 712 B1**
(45) Veröffentlichungstag und Bekanntmachung des Hinweises auf die Patenterteilung: **13.06.2012**
(21) Anmeldenummer: 06721195.3
(22) Anmeldetag: 05.04.2006
(51) Int. Cl.: G05B 19/042, G05B 19/418

(54) **VERFAHREN SOWIE VORRICHTUNG ZUR SICHEREN, VERWECHSLUNGSFREIEN UND AUSSCHLIESSLICHEN ZUORDNUNG DER BEFEHLSGEWALT EINER BEDIENPERSON ZU EINER STEUERBAREN TECHNISCHEN EINRICHTUNG**
METHOD AND DEVICE FOR THE SAFE, SYSTEMATIC, EXCLUSIVE ASSIGNMENT OF THE COMMAND AUTHORISATION OF AN OPERATOR TO A CONTROLLABLE TECHNICAL INSTALLATION
PROCEDES ET DISPOSITIFS PERMETTANT D'ATTRIBUER LE COMMANDEMENT D'UN OPERATEUR A UN DISPOSITIF TECHNIQUE A COMMANDE DE FAÇON FIABLE, EXCLUSIVE ET SANS CONFUSION

(30) Priorität: 08.04.2005 AT 5962005
(43) Veröffentlichungstag der Anmeldung: 19.12.2007
(73) Patentinhaber: KEBA AG, 4041 Linz (AT)
(72) Erfinder: MÖSCHL, Manfred, A-4209 Engerwitzdorf (AT); SCHININGER, Manfred, A-4020 Linz (AT)
(74) Vertreter: Ofner, Clemens
(86) Internationale Anmeldenummer: PCT/AT2006/000136
(87) Internationale Veröffentlichungsnummer: WO 2006/105567

(56) Entgegenhaltungen:
- EP-A2- 1 233 316
- DE-A1- 10 110 776
- DE-A1- 19 920 299
- US-A- 6 167 464

## Beschreibung

Die Erfindung betrifft Verfahren sowie geeignete Vorrichtungen zur sicheren, verwechslungsfreien und ausschließlichen zeitweiligen Zuordnung der Befehlsgewalt einer Bedienperson zu einer steuerbaren technischen Einrichtung unter Verwendung einer mobilen Bedienvorrichtung. Die erfindungsgemäße mobile Bedienvorrichtung ist technisch zur abwechselnden Bedienung einer Mehrzahl von steuerbaren technischen Einrichtungen mit sicherheitstechnisch relevantem Gefährdungspotenzial geeignet. Sie weist üblicherweise als Sicherheitsschaltelemente ausgebildete Bedienelemente wie Not-Aus Schalter, Zustimmtaster und Betriebsarten-Wahlschalter auf, welche zur Abgabe sicherheitskritischer Steuerkommandos alleine oder in Kombination mit weiteren Bedienelementen vorgesehen sind. Trotz besonderer sicherheitstechnischer Anforderungen für die Übertragung der sicherheitskritischen Steuerkommandos an eine steuerbare technische Einrichtung wird die datentechnische Ankopplung unter Zwischenschaltung üblicher, nicht speziell sicherheitszertifizierter Datenübertragungsmittel und Netzwerktechnologien ermöglicht und die erforderliche Sicherheit durch besondere Ausgestaltung der erfindungsgemäßen Bedienvorrichtung sowie einer korrespondierenden erfindungsgemäßen sicheren Datenübertragungsgegenstelle gewährleistet. Die sichere räumliche Zuordnung einer Bedienperson beziehungsweise der Befehlsgewalt dieser Bedienperson zu einer erfindungsgemäßen Bedienvorrichtung sowie die sichere räumliche und datentechnische Zuordnung der Bedienvorrichtung zu einer steuerbaren technischen Einrichtung erfolgt mittels elektronisch erfassbarer und kodierter Markierungen. Bedienpersonen, zulässige Einwahlpositionen zum Herstellen einer Verbindung mit einer steuerbaren technischen Einrichtung sowie zulässige Arbeitsbereiche für die Abgabe sicherheitskritischer Steuerbefehle werden mit solchen kodierten Markierungen versehen. Die erfindungsgemäße Bedienvorrichtung ist mit einer Leseeinrichtung zur elektronischen Erfassung der Markierungen ausgestattet, wobei eine solche Erfassung nur innerhalb eines eng begrenzen Nahbereiches zur Leseeinrichtung möglich ist. Damit wird eine fehlende, ansonsten durch physikalische Mittel zuverlässig erzwungene und eindeutige Zuordnung durch geeignete datentechnische Überwachungsmittel ersetzt oder ergänzt.

Weitläufige industrielle Fertigungsanlagen, große Maschinen, Gruppen von zusammenwirkenden Manipulatoren und Werkzeugmaschinen weisen heute durchwegs einen hohen Automatisierungsgrad auf.

Im lokalen Umfeld bestimmter Teile solcher Anlagen können im Betrieb erhebliche Gefahren für Personen ausgehen, wie z.B. durch Kollision, Quetschung, sonstige mechanische, thermische oder chemische Einwirkung oder Strahlung. Umfangreiche Sicherheitsvorschriften sehen Maßnahmen vor, um im automatisierten programmgesteuerten Betrieb solcher Anlagen eine Gefährdung von Personen zu minimieren. Dazu gehören beispielsweise technisch überwachte Schutzumzäunungen für einzelne Bearbeitungszellen oder Anlagenabschnitte.

Trotz des hohen Automatisierungsgrades ist jedoch auch regelmäßig der Eingriff durch Fachpersonal erforderlich, insbesondere bei der Inbetriebnahme, Programmierung, Wartung und Instandsetzung nach Störfällen solcher Anlagen bzw. Anlagenteile. Bei diesen Arbeiten ist die Anwesenheit von Personen auch im unmittelbaren Einfluss- und Gefahrenbereich einer Maschine erforderlich, also auch innerhalb einer eingerichteten Schutzumzäunung, beispielsweise beim sog. Teachen eines Roboters. Dabei übernimmt eine speziell geschulte Bedienperson manuelle Kontrolle über zumindest einzelne der Maschinenfunktionen und verwendet dazu entsprechende Bedienvorrichtungen. Dazu werden vorzugsweise mobile Handbediengeräte verwendet, um der Bedienperson während der Abgabe der Steuerbefehle ausreichende Mobilität für eine bestmögliche Sicht auf kritische Maschinen- oder Anlagenteile, wie beispielsweise den Endeffektor eines Roboters zu ermöglichen. Die Sicherheit der Anlage und der Personen in ihrem Einflussbereich wird in dieser Phase entscheidend von der Aufmerksamkeit und der Sorgfalt der Bedienperson beeinflusst.

Obwohl diese Anlagen die meiste Zeit im Automatikbetrieb laufen und nur für einen geringen Teil der Betriebszeit eine manuelle Kontrolle erforderlich ist, passieren statistisch die weitaus meisten Unfälle in einer solchen. Zur Verminderung der Gefahren erlauben einschlägige Sicherheitsvorschriften während der manuellen Kontrolle vielfach nur einen eingeschränkten Betrieb in so genannten Sonderbetriebsarten der Maschine mit gegenüber dem Automatikbetrieb deutlich verminderter Bewegungsgeschwindigkeit oder Antriebsleistung. Zusätzlich ist eine Maschinenbewegung ausschließlich während der Betätigung eines technisch speziell als Sicherheitsschaltelementes ausgestalteten Zustimmtasters durch die Bedienperson möglich. Weiters weisen die mobilen Handbediengeräte üblicherweise auch einen speziell normgerecht gekennzeichneten Not-Aus Schalter oder einen gleich oder ähnlich wirkenden, jedoch anders gekennzeichneten Stopp-Schalter auf, mit welchem die Bedienperson beim Eintreten und Erkennen eines Gefahrenfalles alle laufenden und potenziell gefährdenden Maschinenoperationen in einem bestimmten zugeordneten Anlagenabschnitt umgehend abbrechen und einen sicheren Betriebszustand herstellen kann. Auch der Betriebsarten-Wahlschalter zum manuellen Umschalten der Betriebsart einer steuerbaren technischen Einrichtung zwischen dem vollautomatischen programmgesteuerten Betrieb und einer oder mehrerer Sonderbetriebsarten für eine zumindest teilweise manuelle Kontrolle durch eine Bedienperson, ist üblicherweise als Sicherheitsschaltelement ausgebildet.

Gerade in diesen besonderen Phasen der manuellen Kontrolle einer Maschine oder Anlage, in denen besondere Betriebszustände eintreten, versteckte technische Fehler wie beispielsweise Softwarefehler erstmals zutage treten oder verschiedene Funktionen der Anlage noch gar nicht vollständig in Betrieb genommen und getestet sind und auch Beschädigungen mit der Folge von Fehlfunktionen besonders leicht und häufig eintreten sind Personen im Umfeld dieser technischen Einrichtungen einer erhöhten Gefahr ausgesetzt. Einschlägige Sicherheitsrichtlinien definieren daher strenge Anforderungen an die Ausgestaltung des gesamten Signalweges vom Sicherheitsschaltelement bis zu den Antrieben und den Aktuatoren der steuerbaren technischen Einrichtung, welcher in seiner Gesamtheit allgemein als Sicherheitskreis (engl. "safety loop") bezeichnet wird. Im Gegensatz zu den normalen funktionalen Steuer- und Signalkomponenten der steuerbaren technischen Einrichtung ist der Sicherheitskreis technisch ganz speziell zuverlässig ausgestaltet, so dass einzelne Fehler nicht zum Verlust der Sicherheit führen können (so genannte Einfehlersicherheit) und bestehende Fehler erkannt werden und es nicht zu einer unerkannten Anhäufung von Fehlern mit schlussendlichem Sicherheitsverlust kommen kann.

Die Sicherheitsschaltelemente wirken vielfach direkt oder über entsprechend ausgeführte Sicherheitslogik, beispielsweise eine Sicherheits-SPS, auf die Antriebe beziehungsweise die Energiezufuhr der Anlage und versetzen diese auch dann in einen sicheren Zustand, wenn die jeweilige funktionale Maschinensteuerung oder das Handbediengerät durch einen technischen Defekt oder einen Softwarefehler oder eine externe Störbeeinflussung nicht mehr voll funktionsfähig sein sollte (z.B. bei einem Hängen bleiben einer Taste zum Auslösen einer Verfahrbewegung). Dazu werden die Sicherheitsschaltelemente für gewöhnlich als besonders zuverlässige mehrkreisige Schaltelemente ausgebildet. Weiters wird das Konzept der so genannten Einfehlersicherheit entlang der gesamten Wirkungskette (Sicherheitsschaltelement, Übertragungswege, Leistungsschalter, ...) umgesetzt. Dabei darf ein einzelner Defekt oder Fehler in der gesamten Signalkette nicht zum Verlust der Sicherheit führen. Die Anlage muss auch bei einem einzelnen Defekt im Sicherheitskreis noch in den sicheren Betriebszustand gebracht werden können und die Auslösung oder Fortsetzung einer sicherheitskritischen, d.h. potenziell gefahrbringenden Maschinenoperation, sicher unterbunden werden. Praktisch wird der Einfehlersicherheit z.B. dadurch Rechnung getragen, dass die Kontakte der Sicherheitsschaltelemente zumindest doppelt ausgeführt sind und die Signale zumindest doppelt über unabhängige Signal- bzw. Datenpfade übertragen werden. Dabei signalisieren die Sicherheitsschaltelemente aktiv, eindeutig und mehrkreisig das Vorliegen eines sicheren Zustandes. Sobald auch nur einer der Kreise keinen sicheren Zustand mehr signalisiert, wird die Anlage automatisch in einen sicheren Betriebszustand übergeführt (beispielsweise durch Abschalten der Antriebe).

Den strengen Anforderungen der Sicherheitsrichtlinien stehen die Wünsche der Benutzer und Betreiber solcher Anlagen beziehungsweise solcher steuerbaren technischen Einrichtungen nach möglichst hoher Flexibilität oft diametral gegenüber.

Vorteilhaft und vor allem aus Kostengründen wünschenswert ist die Verwendung von universellen Handbediengeräten, welche wechselweise mit verschiedenen Maschinen oder Anlagenteilen verwendet werden können. Da diese Handbediengeräte nur für relativ kurze Betriebsphasen an bestimmten Stellen erforderlich sind, lässt sich durch die Verwendung solcher universeller Handbediengeräte die Anzahl der erforderlichen Geräte deutlich reduzieren und lassen sich damit auch die Anschaffungskosten deutlich senken. Durch die Einschränkung der Typenvielfalt reduzieren sich die Lagerhaltung und Ersatzteilkosten und verbessert sich die Handhabung, da die Benutzer nicht ständig je nach Anlage oder Maschine ganz unterschiedliche Handbediengeräte verwenden müssen. Da aber die Zuordnung und datentechnische Verbindung zwischen Handbediengerät und Steuerung beziehungsweise dem Sicherheitskreis der Anlage nicht mehr fest sondern veränderlich ist, entsteht dadurch die Möglichkeit einer irrtümlich fehlerhaften Zuordnung eines Bediengerätes durch die Bedienperson beziehungsweise eines Irrtums der Bedienperson über die tatsächliche Zuordnung. In weiterer Folge besteht erhöhte Gefahr einer ungewollten Auslösung einer sicherheitskritischen Bedienhandlung an einer anderen Stelle, als von der Bedienperson eigentlich beabsichtigt. Als besonders vorteilhaft und für den Anwender wünschenswert ist die Ausgestaltung der mobilen Handbediengeräte mit einer drahtlosen Datenanbindung an die jeweilige funktionale Steuerung der technische Einrichtung, da dies eine größtmögliche Bewegungsfreiheit während des Bedienvorganges ohne eine Behinderung durch ein Kabel erlaubt sowie den einfachen Wechsel zwischen verschiedenen Maschinen und Anlagenteilen ermöglicht. Hierdurch wird die Gefahr einer fehlerhaften Zuordnung jedoch nochmals deutlich erhöht, da sich beim Aufbau der drahtlosen Verbindung prinzipiell mehrere mögliche Gegenstellen beziehungsweise Ziele im Sende- und Empfangsbereich befinden können und der Bedienperson dabei nicht augenscheinlich und unmissverständlich klar ist, mit welcher Maschine oder mit welchem Anlagenteil die Verbindung tatsächlich hergestellt wird.

Durch die drahtlose Datenanbindung entsteht eine weitere Gefahr dadurch, dass sich eine Bedienperson nach an sich korrekt hergestellter Verbindung zu einer steuerbaren technischen Einrichtung anschließend mit der Bedienvorrichtung von der Maschine oder dem Anlagenteil weg bewegt, den vorgesehenen Arbeitsbereich, beispielsweise die Fertigungszelle, verlässt und dann möglicherweise unbewusst, zumindest aber aus Sicherheitsgründen unzulässig, Steuerkommandos an die technische Einrichtung absetzen kann, ohne jedoch das Eintreten einer Gefahrensituation, beispielsweise für andere in der Nähe befindliche Personen, überhaupt erkennen und in der Folge angemessen reagieren zu können.

Eine weitere Gefahrenquelle liegt in möglichen technischen Unzulänglichkeiten der verwendeten Übertragungsmittel. Aus Kostengründen werden in weitläufigen Anlagen bevorzugt Datennetzwerke oder Datenbusse, sowohl drahtgebunden als auch drahtlos, zur datentechnischen Verbindung der verschiedenen Steuerungs- und Überwachungsmittel eingesetzt. Aus wirtschaftlicher Sicht günstig und aus Gründen einer einheitlichen und technisch durchgängigen Lösung für den Datenaustausch innerhalb eines Betriebes erstrebenswert ist die Verwendung herkömmlicher Netzwerk- beziehungsweise Funkübertragungsstandards, wie z.B. Ethernet, Wireless LAN (WLAN), Bluetooth, ZigBee oder ähnlichem. Sie erlauben kostengünstige, flexible und Ressourcen schonende Verbindungen zwischen den Komponenten. Allerdings nutzen hier normalerweise eine Mehrzahl von Datenquellen und Datensenken quasi gleichzeitig ein bestimmtes physikalisches Übertragungsmedium, entweder zeitlich abwechselnd oder auch gleichzeitig durch unterschiedliche aufmodulierte Trägerfrequenzen (beispielsweise Funkkanäle). Eine bestimmte Datenquelle ist jedoch, anders als bei einer drahtgebundenen echten beziehungsweise physikalischen Punkt-zu-Punkt Verbindung, nicht eindeutig und nicht physikalisch zwingend mit einer bestimmten Datensenke verbunden, sondern nur logisch über bestimmte Kodierungen oder Adressen. Auch wenn diese üblichen Übertragungsmittel normalerweise zuverlässig funktionieren, ist eine Übermittlung eines Datentelegramms von einem Sender an einen beabsichtigten Empfänger keinesfalls garantiert und eine Fehlleitung zufolge eines einzelnen Softwarefehlers oder Hardwarefehlers, zufolge einer fehlerhaften Konfiguration bei den Adressen der Teilnehmer oder zufolge einer Verfälschung von Adressinformationen durch elektromagnetische oder sonstige Störeinflüsse möglich. Die für eine Übertragung von Sicherheitsschaltzuständen im Rahmen einer sicherheitstechnischen Abnahmeprüfung erforderliche Sicherheit weisen diese üblichen Datenübertragungsmittel von sich aus nicht auf, so dass entsprechende Sicherungsmaßnahmen zur Herstellung einer garantierten Sicherheit in den Datenendgeräten getroffen werden müssen.

Selbst bei einer datentechnisch fehlerfreien Zuordnung zwischen einem Bediengerät und einer Maschine oder einem Anlagenteil kann auf Seite der technischen Einrichtung gegebenenfalls zwar die Quelle eines Datentelegramms anhand einer Adresse oder dergleichen auf Geräteebene identifiziert werden, nicht jedoch die genaue örtliche Herkunft der Nachricht, also der Standort des mobilen Bediengerätes. So könnte beispielsweise eine Bedienperson aus Bequemlichkeit eine Datenverbindung ausgehend von einer entfernten Stelle herstellen, von welcher kein ausreichender Einblick in den gesteuerten Anlagenteil möglich ist und kann dann von dieser Bedienperson eine mögliche Gefahrensituation, beispielsweise durch weitere Personen im Anlagenbereich, unter Umständen gar nicht erkannt werden.

Wesentlich ist aus Sicherheitsgründen auch, dass die Auslösung sicherheitskritischer Kommandos zuverlässig nur von einer einzigen Stelle ausgehend beziehungsweise von einer einzigen Bedienperson erfolgen darf und nicht etwa mehrere Bediengeräte und mehrere Personen gleichzeitig und quasi konkurrierend mit der funktionalen Steuerung oder dem Sicherheitskreis einer Maschine verbunden sind. Es muss also eine eindeutige Punkt-zu-Punkt Verbindung zwischen ausschließlich einer Bedienvorrichtung und einer steuerbaren technischen Einrichtung sichergestellt sein. Ein Fehler kann vor allem auch dann eintreten, wenn eine bestehende Datenverbindung durch irgendwelche Störungen vorübergehend unterbrochen wird, dies jedoch nur bei einem der beiden Kommunikationspartner zu einem Verbindungsabbau führt. Dann kann in einer weiteren Anmeldung ein dritter Kommunikationsteilnehmer eine Verbindung zu dem Teilnehmer mit der abgebrochenen Verbindung aufbauen, während auch der ursprüngliche Kommunikationsteilnehmer nach Beseitigung der Störung wieder Datentelegramme an den selben Teilnehmer senden oder von diesem empfangen kann.

Eine weitere mögliche Gefahrenquelle entsteht, wenn beispielsweise bei der Inbetriebnahme einer Fertigungsstraße gleichzeitig in benachbarten Anlagenteilen beziehungsweise Fertigungszellen mehrere Personen jeweils mit gleichartigen mobilen Bediengeräten arbeiten und beispielsweise Programmier- oder Einstellarbeiten vornehmen. Wenn die Bediengeräte bei bestehender Datenverbindung vorübergehend abgelegt werden, um beispielsweise beide Hände für eine manuelle Tätigkeit frei zu haben, besteht die Gefahr, dass danach irrtümlich ein falsches Bediengerät wieder aufgenommen und ein sicherheitskritisches Kommando an einen falschen Anlagenteil abgesetzt wird. Eine Unterscheidung ist für die Bedienpersonen aufgrund der Gleichartigkeit der Bediengeräte oft schwierig und eine Verwechslung, wie oben dargestellt, nicht auszuschließen. Eine ähnliche Gefahr entsteht durch mögliche Bedienhandlungen zufolge unbefugter Personen, wenn diese Zugriff zu einem abgelegten Bediengerät mit bereits bestehender Datenverbindung erlangen oder eine solche Datenverbindung einfach herstellen können.

Allen bisher dargestellten Gefahrenquellen liegt das Phänomen zugrunde, dass eine beabsichtigte eindeutige und ausschließliche Zuordnung der Befehlsgewalt einer bestimmten befugten aus einer Mehrzahl möglicher Bedienpersonen zu einer bestimmten aus einer Mehrzahl von steuerbaren technischen Einrichtungen entweder fehlerhaft hergestellt wird oder fehlerhaft oder unzulässig abgeändert wird.

In der Schrift DE 101 10 776 A1, deren Offenbarungsinhalt hiermit ausdrücklich und vollinhaltlich in dieses Dokument übernommen wird, wird ein Verfahren für eine sichere Zuordnung eines drahtlos oder über ein Bussystem datengekoppelten Handbediengerätes an eine bestimmte Maschine aus einer Mehrzahl von zuordenbaren Maschinen oder Anlagen beschrieben. Dabei wird ein zum Übertragungskanal für die eigentlichen Nutzdaten zusätzlicher unabhängiger zweiter Datenkanal mit definiert begrenzter Reichweite oder definierter Richtcharakteristik zu einer Gegenstelle beziehungsweise Anmeldestelle an der Maschine verwendet. Über diesen zweiten Datenkanal werden die für die Anmeldung und Kommunikation über den Nutzdatenkanal erforderlichen Daten wie beispielsweise Adressen ausgetauscht. Damit muss der Benutzer eines Handbediengerätes sich zum Herstellen einer Datenverbindung zur Steuerung einer Maschine ganz bewusst in unmittelbare Nähe einer gekennzeichneten Anmeldestelle begeben oder eine solche Anmeldestelle gezielt anpeilen. Die Anmeldestellen sind örtlich der jeweiligen Maschine oder dem Anlagenteil zugeordnet, so dass für den Benutzer bei der Anmeldung ein Irrtum über die ausgewählte Maschine oder den Anlagenteil oder ein Irrtum über die Adresse praktisch auszuschließen sowie die unbefugte Herstellung der Verbindung aus der Ferne auszuschließen ist.

Es verbleibt jedoch das hinsichtlich der Anforderungen der Sicherheitstechnik wesentliche Risiko einer technisch verursachten fehlerhaften oder fehlgeleiteten Datenübertragung. Sicherheitstechnisch zertifizierte Busverbindungen und Funkverbindungen bei denen dieses Risiko durch entsprechende Maßnahmen ausgeschlossen oder angemessen reduziert ist, gehören zwar dem Stand der Technik an und sind auch kommerziell erhältlich, werden jedoch aus Kostengründen nur lokal begrenzt verwendet beziehungsweise nur fallweise eingesetzt. Bei breit eingesetzten und kostengünstigen Standard-Datennetzwerken wie beispielsweise Ethernet, WLAN und Bluetooth ist hingegen trotz generell guter Zuverlässigkeit eine für eine sicherheitstechnische Zertifizierung erforderliche Sicherheit oder Fehlerfreiheit nicht garantiert.

Auch das Sicherheitsrisiko des unbeabsichtigten Vertauschens von Handbediengeräten nach bereits erfolgter Herstellung einer Datenverbindung zu einer Steuerung oder der unbefugten Inbetriebnahme wird vom Stand der Technik nicht zufrieden stellend ausgeschlossen.

Ungenügend ist ebenfalls die Gestaltungsmöglichkeit des überwachten Arbeitsraumes, in dem sich eine Bedienperson mit der mobilen Bedienvorrichtung nach einer erfolgten Zuordnung zu einer steuerbaren technischen Einrichtung aufhalten muss, um entsprechende Steuerkommandos absetzen zu können.

Aufgabe der gegenständlichen Erfindung ist daher die Angabe beziehungsweise Schaffung von Verfahren zum Herstellen, Überwachen und Aufheben einer sicheren und eindeutigen Zuordnung der Befehlsgewalt einer befugten Bedienperson zu einer mobilen Bedienvorrichtung und weiters zu einem Sicherheitskreis einer steuerbaren technischen Einrichtung sowie zu dem Arbeitsbereich im Umfeld der steuerbaren technischen Einrichtung von welchem aus die Bedienperson Steuerkommandos abgeben darf. Weitere Aufgabe der Erfindung ist die Schaffung von Verfahren für die eindeutige und sichere zeitweilige datentechnische Anbindung einer mobilen Bedienvorrichtung an den Sicherheitskreis einer steuerbaren technischen Einrichtung sowie für die sichere zeitweilige datentechnische Zuordnung der Bedienvorrichtung zu einem Arbeitsbereich von welchem aus Freigabesignale an den Sicherheitskreis übermittelt werden dürfen. Ebenfalls Aufgabe der Erfindung ist die Schaffung von geeigneten Vorrichtungen, insbesondere einer sicheren mobilen Bedienvorrichtung und einer sicheren Datenübertragungsgegenstelle zur Durchführung der erfindungsgemäßen Verfahren.

Überraschender Weise wird die Vielfalt der zuvor beschriebenen Gefahren und die damit zusammenhängenden Sicherheitsaufgaben, welche vom Stand der Technik nicht, nur ungenügend oder nur punktuell gelöst werden, durch die erfindungsgemäßen Verfahren und Vorrichtungen auf einfache Weise und umfassend gelöst.

Die erfindungsgemäße Lösung sieht vor, die bei universell verwendbaren mobilen Bedienvorrichtungen fehlende physikalisch erzwungene Zuordnung zum Sicherheitskreis einer steuerbaren technischen Einrichtung, welche etwa bei stationären Bedieneinrichtungen durch festverdrahtete leitungsgebundene eindeutige Punkt-zu-Punkt Datenverbindungen und die ortsfeste Anbringung der Bedienvorrichtung gegeben ist, durch technische Überwachungsmittel zu ersetzen.

Dazu sind elektronisch erfassbare und unterscheidbar kodierte und unterschiedlich verwendete Markierungen vorgesehen. Weiters ist die erfindungsgemäße mobile Bedienvorrichtung mit einer Leseeinrichtung zur vorzugsweise drahtlosen Erfassung dieser Markierungen beziehungsweise von deren Kodierungen ausgestattet. Diese Leseeinrichtung weist einen vergleichsweise begrenzten Erfassungsbereich beziehungsweise eine kurze Erfassungsdistanz auf, so dass durch eine sichere Erfassung einer Markierung die räumliche Nähe dieser Markierung zur Leseeinrichtung auch nach sicherheitstechnischem Maßstab ausreichend sicher festgestellt ist. Für die nach sicherheitstechnischem Maßstab sichere Erfassung ist die Bedienvorrichtung mit zumindest zwei Prozessoren oder Erfassungsschaltkreisen ausgestattet, welche unabhängig von einander und einfehlersicher via Leseeinrichtung die Markierungskodierungen lesen, prüfen und für die Kommunikation mit der steuerbaren technischen Einrichtung verwenden. Zusätzlich zur sicheren Erfassung der Markierungen werten die zumindest zwei Prozessoren auch fortwährend die Schalt- beziehungsweise Betätigungszustände der in der Bedienvorrichtung angebrachten Sicherheitsschaltelemente unabhängig und einfehlersicher aus und kodieren diese jeweils unabhängig in Datentelegrammen. Diese Datentelegramme werden über eine Datenschnittstelle zur steuerbaren technischen Einrichtung übertragen. Die Datentelegramme werden mit entsprechenden Kodierungen, Kanal- und Prüfinformationen versehen, um beim Empfänger auf Vollständigkeit, Ursprung, Fehlerfreiheit und Aktualität geprüft werden zu können.

Als datentechnischer Kommunikationspartner und als Schnittstelle für die Herstellung einer sicheren Punkt-zu-Punkt Kommunikation der mobilen Bedienvorrichtung zum Sicherheitskreis einer steuerbaren technischen Einrichtung ist erfindungsgemäß eine entsprechend ausgebildete sichere Datenübertragungsgegenstelle vorgesehen. Diese sichere Datenübertragungsgegenstelle ist fest verdrahtet in den Sicherheitskreis eingebunden. Über eine Datenschnittstelle zu den zwischengeschalteten Datenübertragungsmitteln in Richtung der mobilen Bedienvorrichtung werden sicher kodierte und mit Prüfinformationen versehene Datentelegramme von der Bedienvorrichtung empfangen und korrespondierend zur Bedienvorrichtung von ebenfalls mindestens zwei Prozessoren oder Überwachungsschaltkreisen empfangen und unabhängig und einfehlersicher geprüft, ausgewertet und dem Inhalt der Datentelegramme und dem Sicherheitsstatus der Datenverbindung entsprechende Signale und Daten in den Sicherheitskreis eingeleitet.

Die elektronisch erfassbaren Markierungen werden nun in drei verschiedenen Ausprägungen im Rahmen der Erfindung eingesetzt:

### 1.) Als Schlüsselmarke:

Zur Identifizierung von berechtigten Bedienpersonen wir diesen eine in der Folge als Schlüsselmarke bezeichnete individualisierte Markierung zugewiesen und wird diese von den Bedienpersonen mit sich getragen. Als Kodierung trägt eine Schlüsselmarke zumindest eine eindeutige Benutzerkennung des zugeordneten Benutzers, sowie gegebenenfalls weitere benutzerspezifische Informationen, etwa Berechtigungsinformationen und Passwortinformationen. Durch die sichere Erfassung einer bestimmten Schlüsselmarke ist die räumliche Nähe der zugeordneten Bedienperson zur mobilen Bedieneinrichtung sicher festgestellt.

### 2.) Als Einwahlmarkierungen:

Spezielle Einwahlstellen, welche örtlich augenscheinlich erkennbar genau einer bestimmten steuerbaren technischen Einrichtung zugeordnet sind und welche zum Herstellen einer eindeutigen Zuordnung einer mobilen Bedienvorrichtung zu dieser steuerbaren technischen Einrichtung aufzusuchen sind, werden mit einer elektronisch erfassbaren Markierung, in weiterer Folge als Einwahlmarkierung bezeichnet, gekennzeichnet. Die Einwahlmarkierungen tragen zumindest eine Sicherheitskodierung, welche eine in den Sicherheitskreis der technischen Einrichtung eingebundene sichere Datenübertragungsgegenstelle als Kommunikationspartner für eine mobile Bedienvorrichtung eindeutig kennzeichnet. Weitere in der Einwahlmarkierung kodierte Informationen können beispielsweise Adress- und Zugangsdaten zur datentechnischen Herstellung der Verbindung über ein oder gegebenenfalls mehrere zwischengeschaltete Datenübertragungsmittel, insbesondere über Datennetzwerke, sein. Eine weitere kodierte Information kann die Zuordnung eines für diese Einwahlposition vorgesehenen Arbeitsbereiches betreffen, beispielsweise einen Zonenkennkode. Durch die sichere Erfassung einer bestimmten Einwahlmarkierung ist die örtliche Nähe der mobilen Bedieneinrichtung zur Einwahlmarkierung sicher festgestellt.

### 3.) Als Zonenmarkierung:

In der örtlichen Umgebung einer steuerbaren technischen Einrichtung, in welcher nach Herstellung einer entsprechenden datentechnischen Zuordnung einer mobilen Bedienvorrichtung mit dieser dann sicherheitskritische Steuerbefehle an die technische Einrichtung beziehungsweise deren Sicherheitskreis abgesetzt werden dürfen, in der Folge als Arbeitsbereich bezeichnet, wird durch eine oder mehrere Markierungen, in der Folge Zonenmarkierung genannt, derart gekennzeichnet, dass von der Leseeinrichtung der mobilen Bedienvorrichtung innerhalb des Arbeitsbereiches stets zumindest eine solche Zonenmarkierung zuverlässig erfasst werden kann. Die Zonenmarkierung trägt zumindest eine Kodierung, in der Folge Zonenkode genannt, welche die Zone datentechnisch identifizierbar kennzeichnet. Durch die sichere Erfassung einer bestimmten Zonenmarkierung ist der örtliche Aufenthalt der mobilen Bedienvorrichtung innerhalb der Zone, welche durch die Zonenmarkierung räumlich festgelegt ist, sicher festgestellt. Die Ausgestaltung und Ausdehnung des Arbeitsbereiches kann durch die Anzahl und Anordnung der Zonenmarkierungen flexibel und vergleichsweise einfach und nachvollziehbar festgelegt werden.

Besonders geeignet zur Verwendung als Markierung sind passive oder aktive Funktransponder, häufig auch als RFIDs bezeichnet. Sie stellen eine weit verbreitete, zuverlässige und preisgünstige Form von elektronisch erfassbaren kodierten Markierungen dar.

Eine zuverlässige und verwechslungssichere Zuordnung einer Bedienperson zu einer erfindungsgemäßen Bedienvorrichtung wird nun dadurch erzielt, dass eine spezielle Anmeldeprozedur (Logon Prozedur) vorgesehen ist, während der sich die Bedienperson mittels ihrer Schlüsselmarke und gegebenenfalls einer zusätzlichen Passworteingabe an der Bedienvorrichtung identifiziert, dabei die Benutzerkennung von der Schlüsselmarke gelesen und nach gültiger Passworteingabe sowie einer Prüfung gegebenenfalls zugeordneter individueller Benutzerberechtigungen in einem Speicher der Bedienvorrichtung als aktive Benutzerkennung registriert wird. Diese Zuordnung der Bedienperson geschieht zunächst völlig unabhängig von einer etwaigen bestehenden oder nachfolgenden Zuordnung der Bedienvorrichtung zu einer bestimmten steuerbaren technischen Einrichtung beziehungsweise als vorausgehendes und in sich abgeschlossenes Verfahren für ein nachfolgendes Zuordnungsverfahren der Bedienvorrichtung zu einer bestimmten steuerbaren technischen Einrichtung.

Während ein aktiver Benutzer in der Bedienvorrichtung registriert ist, wird von der Bedienvorrichtung in regelmäßigen Zeitabständen versucht, die Schlüsselmarke des registrierten Benutzers mittels der eingebauten Leseeinrichtung erneut zu erfassen. Nur wenn die Schlüsselmarke regelmäßig, sicher und unabhängig durch die beiden Prozessoren beziehungsweise Erfassungsschaltkreise erfasst wird, werden die verschiedenen Steuerfunktionen, insbesondere die sicherheitskritischen Steuerkommandos überhaupt freigeschaltet. Sobald die Schlüsselmarke nicht mehr sicher erfasst werden kann oder eine Schlüsselmarke mit einer anderen als der registrierten Benutzerkennung erfasst wird, werden zumindest ein Teil der Steuerfunktionen der Bedienvorrichtung automatisch gesperrt. Sie werden erst nach erneuter sicherer Erfassung der Schlüsselmarke des registrieren Benutzers wieder automatisch freigeschaltet.

Darüber hinaus ist das Anmeldeverfahren derart gestaltet, dass stets nur eine einzige Bedienperson als aktive Bedienperson registriert sein kann, also das Anmeldeverfahren nur durchgeführt werden kann, wenn zuvor keine Bedienperson in der Bedienvorrichtung als aktiver Benutzer registriert ist. Erst im Zuge eines speziellen Abmeldeverfahrens wird die registrierte aktive Benutzerkennung wieder aus dem Speicher der Bedienvorrichtung gelöscht oder als inaktiv gekennzeichnet, so dass anschließend erst die Anmeldung einer anderen Bedienperson möglich wird. Um für den aktiven Benutzer absolut sicher zu stellen, dass nach erfolgreicher Anmeldung nur er alleine Zugriff auf die Funktionen der Bedienvorrichtung hat, kann auch das Abmeldeverfahren nur durchgeführt werden, wenn die Schlüsselmarke des registrierten Benutzers sicher erfasst wird. Darüber hinaus wird die aktive Benutzerkennung vorzugsweise in einem nicht flüchtigen Speicher der Bedienvorrichtung gespeichert, so dass auch nach einem Aus- und Wiedereinschalten der Energieversorgung der Bedienvorrichtung eine vorgenommene Benutzerzuordnung erhalten bleibt und nicht etwa dadurch eine andere Bedienperson Zugriff auf die Bedienvorrichtung erlangen kann.

Damit ist die irrtümliche oder missbräuchliche Verwendung der Bedienvorrichtung durch eine grundsätzlich nicht benutzungsberechtigte Person ebenso zuverlässig verhindert, wie die irrtümliche oder missbräuchliche Verwendung durch eine andere als die registrierte Bedienperson. Ein irrtümliches Vertauschen von mobilen Bedienvorrichtungen mit bestehender Zuordnung und Datenverbindung zu einer steuerbaren technischen Einrichtung bleibt damit ohne sicherheitskritische Folgen.

Zumindest teilweise ähnlich erfolgt die zuverlässige und verwechslungssichere Zuordnung einer erfindungsgemäßen mobilen Bedienvorrichtung zum Sicherheitskreis einer steuerbaren technischen Einrichtung beziehungsweise zur sicheren Datenübertragungsgegenstelle, welche in den Sicherheitskreis der technischen Einrichtung fest verdrahtet eingebunden ist.

Dabei wird zumindest eine Einwahlstelle festgelegt, bei der aufgrund der räumlichen Lage beziehungsweise Zuordnung zur steuerbaren technischen Einrichtung diese Zuordnung zweifelsfrei und augenscheinlich für eine Bedienperson erkennbar ist. Eine solche geeignete Einwahlstelle könnte beispielsweise direkt außerhalb der Schutztüre zu einer im Automatikbetrieb mittels Umzäunung gesicherten Bearbeitungszelle eines Roboters sein. Diese sowie gegebenenfalls weitere alternativ festgelegte Einwahlstellen werden nun durch elektronisch erfassbare Einwahlmarkierungen gekennzeichnet. Die verwendeten Einwahlmarkierungen tragen jeweils zumindest eine Sicherheitskodierung.

In der sicheren Datenübertragungsgegenstelle der technischen Einrichtung ist diese Sicherheitskodierung der Einwahlmarkierung quasi permanent in einem nicht flüchtigen Speicher registriert. Im Falle mehrerer möglicher Einwahlstellen können gegebenenfalls auch mehrerer Sicherheitskodierungen von den mehreren Einwahlmarkierungen registriert sein. Die Registrierung der zugeordneten Einwahlmarkierungen beziehungsweise deren Sicherheitskodierungen erfolgt normalerweise einmalig im Zuge der Installation oder Inbetriebnahme der technischen Einrichtung vor ort durch besonders autorisierte Personen oder auch bereits vor Auslieferung der technischen Einrichtung durch den Hersteller.

Das Anmeldeverfahren zur verwechslungssicheren Zuordnung der Bedieneinrichtung zur technischen Einrichtung sieht nun vor, dass eine Bedienperson sich mit der mobilen Bedieneinrichtung zu der zumindest einen zugeordneten Einwahlposition begibt und dort das Zuordnungsverfahren einleitet beziehungsweise dieses auch automatisch eingeleitet wird. Dabei wird mittels der Leseeinrichtung der Bedienvorrichtung die Einwahlmarkierung, insbesondere die dort gespeicherte Sicherheitskodierung von den Prozessoren oder Erfassungsschaltkreisen sicher erfasst. Gleichzeitig mit der Sicherheitskodierung können auch verschiedene Adress- und Zugangsinformationen von der Einwahlmarkierung gelesen werden, mit welchen über die zwischengeschalteten Datenübertragungsmittel, wie beispielsweise ein Funkdatennetzwerk, eine Datenverbindung zur zugeordneten sicheren Datenübertragungsgegenstelle hergestellt werden kann. Die Datenpakete, welche von der Bedienvorrichtung an die Datenübertragungsgegenstelle gesendet werden, werden mit der gelesenen Sicherheitskodierung gekennzeichnet. Dadurch kann in der Datenübertragungsgegenstelle mittels der dort permanent registrierten zulässigen Sicherheitskodierungen die korrekte Herkunft der Datentelegramme vom Ort der Einwahlmarkierung sicher durch die Prozessoren oder Überwachungsschaltkreise in unabhängig geprüft werden. Etwaige Übermittlungsfehler bei der Übertragung über die nicht sicherheitszertifizierten Datenübertragungsmittel mit der Folge einer Datenübertragung an eine falsche Datenübertragungsgegenstelle können aufgrund der unabhängig mittels Lesevorrichtung in die Bedienvorrichtung geladene und in der zugeordneten Datenübertragungsgegenstelle sicher geprüften Sicherheitskodierung zweifelsfrei erkannt werden. Ein technisch bedingter fehlerhafter Verbindungsaufbau wird damit zuverlässig und unabhängig von der Übertragungssicherheit der zwischengeschalteten Datenübertragungsmittel verhindert. Vorzugsweise wird im Zuge des Anmeldeverfahrens im Bediengerät auch ein quasi einmaliger Verbindungskennkode generiert und gespeichert, beispielsweise als Kombination aus Datum, Uhrzeit, einer Gerätekennung, der gelesenen Sicherheitskodierung sowie einer Zufallszahl, welcher die neu hergestellte Zuordnung zwischen Bediengerät und Datenübertragungsgegenstelle eindeutig kennzeichnet, zusammen mit der Sicherheitskodierung an die Datenübertragungsgegenstelle übermittelt, dort als aktiver Verbindungskennkode registriert und in einem Speicher gespeichert und in der Folge zu Kennzeichnung und Überprüfung der versendeten und empfangenen Datentelegramme verwendet wird. Der Verbindungskennkode hat nur für die Dauer der Zuordnung Gültigkeit. Wird die Zuordnung aufgehoben und anschließend neu hergestellt, wird ein neuer Verbindungskennkode generiert, registriert und Datenkennzeichnung verwendet, so dass Datentelegramme, welche mit einem früher verwendeten Verbindungskennkode gekennzeichnet wurden in jedem Fall als ungültig erkannt und ignoriert werden.

Wird der Verbindungsaufbau von der sicheren Datenübertragungsgegenstelle akzeptiert, so wird der Verbindungskennkode und/oder die Sicherheitskodierung auch in der Bedieneinrichtung registriert und zumindest eine davon zur Kennzeichnung der versendeten beziehungsweise zur Prüfung der empfangenen Datentelegramme verwendet. Fehlerhafte Zustellung der Datentelegramme zufolge technischer Fehler in den nicht sicherheitszertifizierten zwischengeschalteten Datenübertragungsmitteln werden sicher erkannt und die entsprechenden Datentelegramme ohne Verlust der Sicherheit ignoriert.

Sowohl die Bedienvorrichtung als auch die Datenübertragungsgegenstelle sind derart ausgestaltet, dass ein Verbindungsaufbau nur dann ermöglicht wird, wenn noch keine registrierte Verbindung besteht. Vor dem erfolgreichen Herstellen einer neuen Zuordnung muss also eine zuvor bestehende Zuordnung durch ein ordnungsgemäßes Abmeldeverfahren aufgehoben und eine registrierte aktiven Sicherheitskodierung und gegebenenfalls ein Verbindungskennkode aus dem jeweiligen Speicher gelöscht oder inaktiv gekennzeichnet werden. Damit ist sichergestellt, dass stets nur eine eineindeutige Punkt-zu-Punkt Verbindung zwischen einer Bedienvorrichtung und einer Datenübertragungsgegenstelle bestehen kann und nicht etwa zwei Benutzer mittels zweier Bedienvorrichtungen gleichzeitig und konkurrierend Steuerbefehle übermitteln können oder ein Benutzer mit einer Bedienvorrichtung Steuerbefehle gleichzeitig an zwei Datenübertragungsgegenstellen absetzen kann.

Um ein unbeabsichtigtes, irrtümliches oder zufolge eines technischen Fehlers ausgelöstes Abmelden beziehungsweise Aufheben einer bestehenden Zuordnung zu verhindern, wird aus Sicherheitsgründen vorzugsweise auch ein Abmeldevorgang nur beim sicheren Erfassen einer gültigen Einwahlmarkierung ermöglicht. Zusätzlich werden die registrierten und gespeicherten Verbindungsdaten sowohl im mobilen Bediengerät als auch in der sicheren Datenübertragungsgegenstelle vorzugsweise in einem nicht flüchtigen Speicher gesichert, so dass eine hergestellte Zuordnung auch nach dem Aus- und Wiedereinschalten der jeweiligen Energieversorgung zuverlässig erhalten bleibt.

Insgesamt wird durch das beschriebene Zuordnungsverfahren unter Verwendung der Einwahlmarkierungen sowohl die Gefahr der irrtümlichen Herstellung einer datentechnischen Zuordnung zu einer anderen als der von der Bedienperson beabsichtigten technischen Einrichtung nahezu vollständig eliminiert. Zusätzlich wird ein möglicher Verlust der Sicherheit durch eine technisch bedingte falsche Übermittlung der sicherheitsrelevanten Datentelegramme sowohl beim Aufbau der Verbindung als auch in der weiteren Kommunikation zuverlässig verhindert. Es wird auch verhindert, dass zufolge eines einzelnen technischen Fehlers beim Auf- oder Abbau einer Verbindung mehrere Bedienvorrichtungen oder mehrere Datenübertragungsgegenstellen an einer Datenverbindung beteiligt sind.

Durch Verknüpfung des sicheren Zuordnungsverfahrens für eine Bedienperson zu einer Bedienvorrichtung und des sicheren Zuordnungsverfahrens eines mobilen Bediengeräts zu einer steuerbaren technischen Einrichtung lässt sich darüber hinaus eine sichere und eindeutige Zuordnung einer Bedienperson beziehungsweise von deren Befehlsgewalt zu einer steuerbaren technischen Einrichtung herstellen. Dabei werden Benutzerdaten, insbesondere die eindeutige Benutzerkennung, welche im Zuge der Zuordnung der Bedienperson zur Bedienvorrichtung in der Bedienvorrichtung registriert wurde, im Zuge der Herstellung der sicheren Zuordnung der mobilen Bedienvorrichtung zur steuerbaren technischen Einrichtung weiter an die entsprechende Datenübertragungsgegenstelle übermittelt und dort als aktive Benutzerkennung registriert und vorzugsweise nichtflüchtig gespeichert. Eine Aufhebung dieser Zuordnung des Benutzers zur technischen Einrichtung kann wiederum aus Sicherheitsgründen nur durch die registrierte Person selbst erfolgen. Wird die Benutzerkennung aus der Schlüsselmarke des registrierten Benutzers fortwährend in der Bedienvorrichtung mittels der Leseeinrichtung sicher erfasst und diese zur Kennzeichnung der übermittelten Datentelegramme verwendet, so kann auch in der sicheren Datenübertragungsstelle quasi unabhängig von der Bedienvorrichtung auf die Abwesenheit des registrierten Benutzers an der Bedienvorrichtung reagiert werden und können sicherheitskritische Steuerkommandos und Funktionen auch in der Datenübertragungsgegenstelle zuverlässig gegen Auslösen durch nicht berechtigte oder nicht registrierte Personen gesperrt werden. Ein wesentlicher sicherheitstechnischer Vorteil der Zuordnung des Benutzers zur steuerbaren technischen Einrichtung liegt in dem Umstand, dass nach erfolgter Zuordnung bis zur regulären Aufhebung der Zuordnung keine andere Person als der registrierte Benutzer sicherheitskritische Bedienhandlungen an der technischen Einrichtung vornehmen kann. Schaltet der registrierte Benutzer beispielsweise vom Automatikbetrieb in eine Sonderbetriebsart, so bleibt die Sonderbetriebsart ausgewählt, bis der registrierte Benutzer selbst diese Auswahl wieder abändert. Damit kann der registrierte Benutzer gefahrlos über längere Zeit Wartungsarbeiten an der technischen Einrichtung vornehmen, ohne eine Gefährdung durch unbedachte oder unbeabsichtigte Bedienhandlungen anderer Personen. Bislang wurde dieses Problem in der Praxis nur unzureichend mit Betriebsartenwahlschaltern gelöst, welche mit einem Schlüssel in einer bestimmten Position versperrbar sind. Diese als Sicherheitsschaltelemente mehrkreisig ausgeführten und häufig mit mehreren Schaltstellungen für mehrere unterschiedliche Sonderbetriebsarten ausgeführten Schaltelemente sind einerseits außerordentlich teuer und darüber hinaus nicht wirklich sicher, da es zu einem Schalter fast immer mehrere Schlüssel beziehungsweise Ersatzschlüssel gibt, zumal Schlüsselschalter im industriellen Einsatz besonders der Gefahr einer Beschädigung durch Abbrechen ausgesetzt sind oder ein Schlüssel verloren gehen kann. Letzteres führt häufig dazu, dass die Schlüssel überhaupt im Schalter verbleiben und damit keinerlei Sicherheit gegen eine unzulässige Bedienhandlung mehr besteht. Dieses Risiko wird durch die erfindungsgemäße sichere Zuordnung der Bedienperson zur steuerbaren technischen Einrichtung und der Verriegelung aller sicherheitskritischen Bedienhandlungen für alle anderen Personen bis zur ordnungsgemäßen, bewussten und sicheren Aufhebung der Zuordnung zuverlässig ausgeschlossen.

Die Zuordnung einer Bedienperson zu einer steuerbaren technischen Einrichtung kann speziell auch in Zusammenhang mit einem besonderen Abmeldeverfahren vorteilhaft genutzt werden. Dabei hebt die Bedienperson zwar die datentechnische Zuordnung und Wirkverbindung der mobilen Bedienvorrichtung zu einer ersten technischen Einrichtung auf, bleibt jedoch weiterhin als aktiver und alleiniger Benutzer dieser technische Einrichtung registriert. Damit kann die Bedienperson mit der mobilen Bedienvorrichtung dann zwischenzeitlich eine Bedienhandlung an einer anderen technischen Einrichtung, beispielsweise einer benachbarten Roboterzelle vornehmen, während jedoch eine nach wie vor unzulässige Inbetriebnahme der ersten technischen Einrichtung durch eine andere Bedienperson weiterhin zuverlässig verhindert wird. Eine erneute erfolgreiche Zuordnung einer mobilen Bedienvorrichtung zur ersten technischen Einrichtung kann nur erfolgen, wenn an dieser Bedieneinrichtung jener Benutzer als aktiver Benutzer registriert ist, der auch bereits in der technischen Einrichtung als aktiver Benutzer registriert ist.

Über den reinen Sicherheitsgewinn hinaus gehend können durch die sichere Registrierung eines bestimmten Benutzers an einer technischen Einrichtung auch entsprechende automatisierte Aufzeichnungen über die An- und Abmeldevorgänge und die vorgenommenen Bedienhandlungen geführt werden, welche beispielsweise zur nachträglichen Aufklärung des Herganges von Unfällen, der Beweisführung und der zukünftigen Vermeidung ähnlicher Unfälle verwendet werden können.

Eine weitere ganz bemerkenswerte Verbesserung der Sicherheit bei der Verwendung mobiler und vorzugsweise drahtlos datengekoppelter Bedienvorrichtung entsteht durch die Verwendungsmöglichkeit der elektronisch erfassbaren Markierungen als Zonenmarkierungen zur Festlegung eines zulässigen Arbeitsbereiches, von welchem aus mit einer ordnungsgemäß zu einer steuerbaren technischen Einrichtung zugeordneten mobilen Bedienvorrichtung sicherheitskritische Steuerkommandos abgesetzt werden können.

Innerhalb des vorgesehenen zulässigen Arbeitsbereiches werden die Zonenmarkierungen hinsichtlich Position und Abstand derart angeordnet, dass mit einer innerhalb des Arbeitsbereiches positionierten mobilen Bedienvorrichtung stets zumindest eine der Zonenmarierungen sicher mittels der eingebauten Lesevorrichtung erfasst werden kann. Gleichzeitig erfolgt die Anordnung der Zonenmarkierungen aber auch derart, dass mit einer außerhalb der des Arbeitsbereiches positionierten Bedienvorrichtung bereits in möglichst geringem Abstand zum Rand des vorgesehenen Arbeitsbereiches die Erfassung der Zonenmarkierungen nicht mehr ermöglicht ist.

Die zur Festlegung eines bestimmten Arbeitsbereiches verwendeten Zonenmarkierungen tragen vorzugsweise allesamt eine einheitliche Zonenkodierung, welche diesen Arbeitsbereich eindeutig kennzeichnet und welcher zumindest nach der erfolgreichen Zuordnung der Bedienvorrichtung zur steuerbaren technischen Einrichtung in der mobilen Bedienvorrichtung oder gegebenenfalls auch in der Datenübertragungsgegenstelle registriert ist. Alternativ können die zur Festlegung des Arbeitsbereiches verwendeten Zonenmarkierungen auch individuelle Zonenkodierungen tragen und können in der mobilen Bedienvorrichtung oder der Datenübertragungsgegenstelle die entsprechende Mehrzahl von Zonenkodierungen registriert sein, welche dem Arbeitsbereich zugeordnet sind.

Die eine oder gegebenenfalls mehreren Zonenkodierungen, welche innerhalb des festgelegten Arbeitsbereiches sicher erfasst werden können, sind beispielsweise analog zur Sicherheitskodierung der Einwahlmarkierung permanent in der Datenübertragungsgegenstelle registriert und werden gegebenenfalls während der Zuordnung der mobilen Bedienvorrichtung zur technischen Einrichtung von der Datenübertragungsgegenstelle an die Bedienvorrichtung übertragen. Alternativ können die Zonenkodierungen aber auch in der Einwahlmarkierung permanent gespeichert sein und von dort in die mobile Bedieneinrichtung sowie gegebenenfalls weiter in die Datenübertragungsgegenstelle übertragen und jeweils registriert und gespeichert werden.

Während der bestehenden Zuordnung der mobilen Bedienvorrichtung zur technischen Einrichtung und damit zur sicheren Datenübertragungsgegenstelle und zum festgelegten zulässigen Arbeitsbereich wird von den Prozessoren der Bedienvorrichtung mittels der Lesevorrichtung fortwährend versucht, Zonenmarkierungen beziehungsweise deren Zonenkodierungen sicher zu erfassen. Die sicher erfassten Zonenkodierungen werden entweder in der Bedienvorrichtung mit den registrierten zulässigen Zonenkodierungen verglichen oder aber auch an die Datenübertragungsstelle gesendet und dort mit den registrierten zulässigen Zonenkodierungen verglichen. Sobald keine Zonenkodierung mehr erfasst werden kann, welche einer registrierten zulässigen Zonenkodierung entspricht, ist nicht mehr sicher, dass sich die mobile Bedienvorrichtung innerhalb des vorgesehenen Arbeitsbereiches aufhält und es werden zumindest ein Teil der sicherheitskritischen Bedienfunktionen gesperrt. Aus sicherheitstechnischen Überlegungen erfolgt die Überprüfung der erfassten Zonenkodierungen sowie die Registrierung der zulässigen Zonenkodierungen vorteilhaft in der Datenübertragungsgegenstelle.

Damit ist auf einfache Weise sichergestellt, dass sicherheitskritische Steuerkommandos nur innerhalb des festgelegten Arbeitsbereiches abgegeben beziehungsweise ausgeführt werden können. Die irrtümliche oder missbräuchliche Entfernung einer mobilen Bedienvorrichtung aus dem Arbeitsbereich trotz weiter bestehender Datenverbindung zur technischen Einrichtung kann damit nicht zum Verlust der Sicherheit führen. Damit ist eine für drahtlos datengekoppelte mobile Bedienvorrichtungen gegenüber leitungsgebundenen Bedienvorrichtungen bisher bestehende und nur ungenügend gelöste sicherheitstechnische Aufgabenstellung zufriedenstellend gelöst.

Zusammenfassend ist nochmals festzuhalten, dass die erstaunliche Fülle sicherheitstechnischer Aufgabenstellungen unter erfindungsgemäßer Bereitstellung und Verwendung von vergleichsweise einfachen, zuverlässigen und wirtschaftlich günstigen technischen Mitteln umfassend und zufriedenstellend gelöst werden.

Eine Aufgabe der Erfindung wird durch die Merkmale gemäß Anspruch 1 gelöst.

Erfindungsgemäß ist eine mobile Bedienvorrichtung mit einer Datenschnittstelle, zumindest zwei Prozessoren oder Erfassungsschaltkreisen und einer Leseeinrichtung zur Erfassung von elektronisch lesbaren Markierungen oder Kennzeichnungen geschaffen. Über die Datenschnittstelle werden Steuerkommandos und gegebenenfalls Betätigungszustände von Sicherheitsschaltelementen an eine steuerbare technische Einrichtung übermittelt sowie gegebenenfalls Visualisierungsdaten zur Darstellung von Informationen auf einem Ausgabemittel der Bedienvorrichtung von dieser steuerbaren technischen Einrichtung empfangen und gegebenenfalls weitere Informationen ausgetauscht. Die Leseeinrichtung ermöglicht die Erfassung von Markierungskodierungen von elektronisch lesbaren Markierungen welche entweder in der Nähe der Leseeinrichtung positioniert sind oder direkt mit der Leseeinrichtung in Kontakt gebracht werden. Durch den begrenzten Erfassungsbereich der Leseeinrichtung ist durch ein korrektes Erfassen einer bestimmten Markierung eine räumliche Nähe zwischen der Markierung und der Bedienvorrichtung sichergestellt. Werden beispielsweise ortsfest angebrachte, eindeutige beziehungsweise unverwechselbare Markierungen mit bekannter Position erfasst, kann damit die Position der Bedienvorrichtung zum Erfassungszeitpunkt zuverlässig eingegrenzt werden. Werden eindeutige beziehungsweise unverwechselbare Markierungen an Personen angebracht, so ist beim Erfassen einer solchen Markierung sowohl die Nähe der Person zum Bediengerät als auch die Identität der Person sichergestellt.

Die zumindest zwei Prozessoren oder Erfassungsschaltkreise können beide unabhängig von einander Nachrichten in Datentelegrammen kodieren und diese über die Datenschnittstelle an die steuerbare technische Einrichtung senden. Dabei können entweder von beiden Prozessoren eigenständige Datentelegramme erstellt und getrennt übertragen werden oder es kann von jedem Prozessor ein eigenständig kodierter Teil eines gemeinsam versendeten Datentelegramms erstellt werden. In der datentechnischen Gegenstelle werden die Datentelegramme dann von zumindest zwei korrespondierenden Prozessoren oder Überwachungsschaltkreisen unabhängig ausgewertet. Eine sicherheitskritische Nachricht, beispielsweise betreffend den Betätigungszustand eines Sicherheitsschaltelementes, wird also zumindest doppelt erfasst, übertragen und ausgewertet. Damit kann ein einzelner Fehler in der gesamten Übertragungskette nicht zur unbeabsichtigten Ausführung eines sicherheitskritischen Steuerkommandos führen.

Werden nun die von den beiden Prozessoren kodierten Datentelegramme zusätzlich mit Markierungskodierungen gekennzeichnet, welche zuvor über die Leseeinrichtung von einer Markierung gelesen wurden, so kann in der Datenübertragungsgegenstelle, in der alle für diese Gegenstelle zulässigen Markierungskodierungen registriert sind, die genaue Herkunft der Nachricht verifiziert werden. Die Herkunft kann sich dabei sowohl auf den Ort der Bedienvorrichtung beziehen, als auch auf die Person, welche die Bedienvorrichtung benutzt und die Nachricht veranlasst hat. Da diese Kodierung nicht über die Datenschnittstelle, sondern nur über die zusätzliche Leseeinrichtung unabhängig und quasi zweikreisig erfasst in die mobile Bedienvorrichtung gelangt, kann eine technisch verursachte fehlerhafte Zuordnung der Bedienvorrichtung oder der Bedienperson zur steuerbaren technischen Einrichtung nach einschlägigen sicherheitstechnischen Maßstäben zuverlässig ausgeschlossen werden. Diese technische Sicherheit für die Zuordnung wird dabei ganz unabhängig von der diesbezüglichen Sicherheit der zwischengeschalteten Übertragungskanäle, beispielsweise Funk-Netzwerken, erzielt und der Einsatz spezieller und teurer Sicherheitsbusse oder dergleichen wird erübrigt.

Dadurch dass die Leseeinrichtung zur im Wesentlichen gleichzeitigen Erfassung mehrerer Markierungskodierungen zufolge mehrerer im Erfassungsbereich der Leseeinrichtung befindlichen Einwahlmarkierungen, Zonenmarkierungen oder Schlüsselmarken geeignet ist, können mehrere im Erfassungsbereich befindliche Markierungen, insbesondere eine Einwahlmarkierung und gleichzeitig eine Schlüsselmarke, störungsfrei und quasi gleichzeitig erfasst werden. Die vorteilhafte Ausgestaltung nach Anspruch 2 ermöglicht eine Datenübertragung von der zugeordneten datentechnischen Gegenstelle, beispielsweise der Steuerung der technischen Einrichtung, zur mobilen Bedienvorrichtung, so dass sowohl zuverlässigere Kommunikationsprotokolle verwendet werden können als auch Prozess- oder Visualisierungsdaten, Dokumente, Konfigurationsparameter, Maschinenprofile, Benutzerprofile, Softwarekomponenten oder Ähnliches in die Bedienvorrichtung geladen werden können.

Die vorteilhafte Ausgestaltung nach Anspruch 3 ermöglicht den drahtlosen Betrieb der mobilen Bedienvorrichtung, vorzugsweise unter Verwendung gängiger und international zugelassener Funkstandards.

Die Ausgestaltung nach Anspruch 4 ermöglicht den Betrieb der mobilen Bedienvorrichtung an gängigen und preisgünstigen Netzwerken.

Die vorteilhafte Ausgestaltung nach Anspruch 5 ermöglicht die zumindest zeitweilige autonome Energieversorgung der elektronischen Komponenten der mobilen Bedienvorrichtung. So kann die Bedienvorrichtung als mobile drahtlos datengekoppelte Bedienvorrichtung betrieben werden oder bei ansonsten leitungsgebundener Datenkopplung die Anschlussstelle gewechselt werden ohne die Bedienvorrichtung aus- und wieder einschalten zu müssen. Es , können aber auch nur gepufferte und damit nichtflüchtige Speicherbausteine oder Echtzeituhren weiter versorgt werden, wenn die Bedienvorrichtung ausgeschaltet beziehungsweise von der Anschlussstelle getrennt wird.

Die vorteilhafte Ausführung nach Anspruch 6 weist ein Sicherheitsschaltelement auf, welches alleine oder in Kombination mit weiteren Eingabeelementen zum sicheren Auslösen und Unterbinden sicherheitskritischer Kommandos und Vorgänge geeignet ist. Der Betätigungszustand wird von beiden Prozessoren oder Erfassungsschaltkreisen wiederholt erfasst und unabhängig an die Datenübertragungsgegenstelle übermittelt. Wird an der Datenübertragungsgegenstelle nicht in regelmäßigen Zeitabständen ein gültiges Datentelegramm mit dem gelesenen Zustand des Sicherheitsschaltelementes empfangen, wird automatisch ein nicht freigebender Betätigungszustand angenommen, d.h. ein nicht betätigter Zustimmtaster oder Befehlsschalter oder ein betätigter Not-Aus Schalter. Im Falle eines in sicherer Technik übertragenen Schaltzustandes eines Betriebsarten-Wahlschalters wird eine ungültige Betriebsart angenommen und signalisiert.

Die vorteilhafte und besonders sichere Ausgestaltung nach Anspruch 7 weist ein zumindest elektrisch mehrkreisiges Sicherheitsschaltelement auf. Es sind also zumindest zwei Kontakte vorgesehen, die unabhängig von einander den Betätigungszustand signalisieren. Damit ist auch der elektrische Kreis des Sicherheitsschaltelementes einfehlersicher ausgestaltet. Ein sicherheitskritischer Betätigungszustand wird nur erkannt, wenn dieser von allen Kontakten signalisiert wird.

Die Ausgestaltung nach Anspruch 8 weist für den Bereich der industriellen Automatisierungstechnik übliche Sicherheitsschaltelemente auf.

Bei einer vorteilhaften Ausgestaltung nach Anspruch 9 sind mehrere Sicherheitsschaitelemente an der Bedienvorrichtung vorgesehen. Dabei kann es sich um Schaltelemente mit unterschiedlichen Funktionen handeln, wie beispielsweise einen Stopp-Schalter und einen Zustimmtaster oder aber auch um mehrere gleichartig wirkende Sicherheitsschaltelemente, wie zum Beispiel zwei Zustimmtaster, die unterschiedlichen Griffbereichen eines mobilen Handbediengerätes zugeordnet sind und je nach Handhaltung alternativ beziehungsweise wahlweise benutzt werden.

Bei der vorteilhaften Ausgestaltung nach Anspruch 10 werden die Betätigungszustände mehrerer Sicherheitsschaltelemente mit an sich gleicher Funktion, insbesondere mehrerer Zustimmtaster, geräteintern logisch bereits richtig mit einander verknüpft und als ein einzelner Betätigungszustand in den Datentelegrammen kodiert und übertragen. Damit können die mobilen Bedienvornchtungen je nach Modell unterschiedlich mit einem oder mehreren Zustimmtastem ausgeführt werden, ohne diesen Umstand auf der Seite der Datenübertragungsgegenstelle oder im verwendeten Datenprotokoll berücksichtigen zu müssen. Besonders zweckmäßig ist eine solche Verknüpfung bei Verwendung der mittlerweile üblichen dreistufigen Zustimmtaster mit den Betätigungszuständen Unbetätigt / Zustimmung / Panik-Stop.

Eine bevorzugte Ausführungsform ist nach Anspruch 11 gegeben. Dabei ist eine Daten- oder Signalverbindung zwischen dem ersten und zweiten Prozessor oder Erfassungsschaltkreis vorgesehen, über welche jeder der beiden Bausteine dem jeweils anderen den von ihm intern festgestellten Sicherheitszustand wie beispielsweise den erfassten Betätigungszustand eines Sicherheitsschaltelementes signalisiert und der jeweils andere diesen signalisierten Zustand mit dem eigenen erfassten Zustand vergleicht. Nur wenn sowohl der selbst erfasste als auch der signalisierte Betätigungs- oder Sicherheitszustand einen freigebenden Zustand kennzeichnen, wird dieser Zustand vom jeweiligen Prozessor oder Erfassungsschaltkreis auch in den Datentelegrammen kodiert.

Durch die Ausführungsform mit den Merkmalen der Ansprüche 12 und 13 können Markierungen mit mehreren Markierungskodierungen gelesen werden. So können beispielsweise für jeden der beiden Prozessoren getrennt unterschiedliche Kodierungen für die Kennzeichnung der Datentelegramme vorgesehen sein oder auch zur Kodierung zusätzliche Informationen wie beispielsweise Adressen für den Verbindungsaufbau, Positionsinformationen, detaillierte Benutzerdaten oder Berechtigungen vorgesehen sein.

Durch die vorteilhafte Ausführungsform nach Anspruch 14 wird technisch sichergestellt, dass bei nacheinander erfolgenden Zugriffen auf die Leseeinrichtung beziehungsweise auf die Markierungsdaten durch den ersten und zweiten Prozessor diese Daten tatsächlich stets von der Markierung stammen und nicht etwa aufgrund eines Defektes oder einer Störung bloß aus einem Zwischenspeicher der Leseeinrichtung geholt sind.

Durch die vorteilhafte Ausführungsform nach Anspruch 15 ist technisch sichergestellt, dass nach dem Einschalten der Bedienvorrichtung die erforderliche Kodierung zur gültigen Kennzeichnung der Datentelegramme nur dann in der Bedienvorrichtung vorliegen kann, wenn diese auch tatsächlich von einer entsprechenden Markierung mittels der Leseeinrichtung gelesen wurde und nicht etwa noch von einer vorangegangenen Zuordnung beispielsweise aufgrund eines Softwarefehlers im Speicher verblieben ist.

Durch die vorteilhafte Ausgestaltung nach Anspruch 16 wird eine selektivere Anwahl einer bestimmten Einwahlmarkierung oder Schlüsselmarke durch Anpeilung ermöglicht beziehungsweise die Gefahr der irrtümlichen Erfassung einer weiteren in der Nähe befindlichen und gleichartigen Markierung verringert.

Die vorteilhaften Ausgestaltungen nach einem der Ansprüche 17 bis 19 verwenden bekannte, gebräuchliche und zuverlässige technische Lösungen für die Leseeinrichtung.

Die vorteilhafte Ausgestaltung nach Anspruch 20 ermöglicht eine gewisse Absicherung gegen ein Aushebeln bzw. Umgehen der Sicherheitsfunktion einer Schlüsselmarke dahingehend, dass nicht beispielsweise aus Bequemlichkeit eine Schlüsselmarke unmittelbar am Gehäuse der Bedienvorrichtung quasi verliersicher aufgeklebt oder anderweitig befestigt wird und somit ein Entfernen der Bedienperson von der Bedienvorrichtung nicht mehr registriert werden kann oder jede beliebige Person Zugriff auf die Funktionen der Bedienvorrichtung erlangen kann. Die kritische Mindestdistanz für eine gültige Erfassung wird vorzugsweise so festgelegt, dass zumindest ein kleiner, lichter Abstand bzw. Luftzwischenraum zwischen der Markierung und dem Gehäuse der Bedienvorrichtung bestehen muss.

Die vorteilhafte Ausgestaltung nach Anspruch 21 ermöglicht eine genauere Eingrenzung des effektiven Erfassungsbereiches der Leseeinrichtung, als dies aufgrund der bloßen Erfassungsempfindlichkeit alleine möglich ist. Zusätzlich kann die maximale Erfassungsdistanz für Schlüsselmarken und Einwahlmarkierungen trotz gleich ausgestalteter Technologie unterschiedlich festgelegt werden.

Durch die Ausgestaltung nach Anspruch 22 können die beiden Prozessoren oder Erfassungsschaltkreise weitgehend asynchron betrieben werden und müssen beim Zugriff auf die Leseeinheit nicht etwa gleichzeitig den selben Datenstrom lesen.

Durch die vorteilhafte und besonders sichere Ausgestaltung nach Anspruch 23 wird sichergestellt, dass ein Defekt oder Fehler zufolge einer Störung oder eines Schaltungs- oder Softwarefehlers nicht in beiden Prozessoren oder Erfassungsschaltkreisen gleichzeitig auftritt und das Prinzip der Einfehlersicherheit gewahrt ist.

Die vorteilhafte Ausgestaltung nach Anspruch 24 ermöglicht die Ausgabe von Informationen an die Bedienperson. Insbesondere grafikfähige Ausgabemittel ermöglichen eine anspruchsvolle Visualisierung von Maschinen- und Prozessdaten sowie vorteilhafte Bedienkonzepte wie Menüs und visualisierte Bedienelemente, insbesondere in Verbindung mit einem berührungssensitiven Schirm (touch screen).

Durch die Ausgestaltung nach Anspruch 25 wird schließlich eine mobile Bedienvorrichtung geschaffen, welche sich besonders für Positionier- und Einstellvorgänge insbesondere an Werkzeugmaschinen und Robotern eignet und rasche und gleichzeitig präzise Positioniervorgänge erlaubt.

Die Aufgabe der Erfindung wird erfindungsgemäß durch die kennzeichnenden Merkmale des Anspruchs 26 gelöst. Dadurch wird ein Verfahren zum sicheren Betreiben einer hergestellten Verbindung zwischen einer mobilen Bedienvorrichtung und einer sicheren Datenübertragungsgegenstelle geschaffen. Durch das Verfahren können technische Fehler oder Unzulänglichkeiten in den zwischengeschalteten Datenübertragungsmittel oder einzelne technische Fehler in der Bedienvorrichtung oder der Datenübertragungsgegenstelle nicht zu einem Verlust der Sicherheit führen. Durch die Kennzeichnung der übertragenen Datentelegramme in der Bedienvorrichtung mit einer zuvor eingelesenen und registrierten Sicherheitskodierung ist die Herkunft der Datentelegramme bezüglich der Anmeldeposition der Bedienvorrichtung für die Datenübertragungsgegenstelle sicher überprüfbar. Ebenso kann jedes Datentelegramm mit einer für die Verbindungsdauer temporär erstellten eindeutigen Verbindungskennung gekennzeichnet werden. Wird bei der Registrierung der Verbindungskennung im Zuge des Verbindungsaufbaus die Sicherheitskodierung aus der Einwahlmarkierung mit übertragen und geprüft, so ist nachfolgend die Verwendung der Verbindungskodierung zur Kennzeichnung und Prüfung der Datentelegramme ausreichend.

Die bevorzugte Ausführungsform des Verfahrens nach Anspruch 27 stellt sicher, dass zumindest die sicherheitskritischen Bedienhandlungen abgesichert übertragen werden.

Das Verfahren nach Anspruch 28 verbessert die Sicherheit gegen technisch bedingte Fehler bei der Erfassung des Schaltzustandes. Nur wenn sowohl der selbst erfasste als auch der vom weiteren Prozessor signalisierte Betätigungszustand einen betätigten Zustimmtaster oder einen unbetätigten Stopp-Schalter kennzeichnen, wird dieser Zustand vom jeweiligen Prozessor oder Erfassungsschaltkreis auch in den Datentelegrammen kodiert.

Durch das besonders sichere Verfahren nach Anspruch 29 wird eine durchgängig mehrkreisige Informationsübertragung geschaffen und damit dem Konzept der Einfehlersicherheit Rechnung getragen.

Das bevorzugte Verfahren nach Anspruch 30 verbessert die Sicherheit gegen technisch bedingte Fehler bei der Auswertung und der Einspeisung sicherheitsrelevanter Nachrichten und Signale in den Sicherheitskreis einer technischen Einrichtung. Nur wenn sowohl der selbst erfasste als auch der vom weiteren Prozessor signalisierte Nachrichteninhalt einen betätigten Zustimmtaster oder einen unbetätigten Stopp-Schalter kennzeichnen, wird dieser Zustand vom jeweiligen Prozessor oder Erfassungsschaltkreis auch in den Sicherheitskreis eingespeist.

Durch das bevorzugte Verfahren nach Anspruch 31 wird ein zusätzliches Prüfkriterium eingerührt, mit dem veraltete Datentelegramme identifiziert werden können. Da die zwischengeschalteten, nicht sicheren Datenübertragungsmittel auch Pufferspeicher aufweisen können, kann es durch technische Fehler oder besondere Betriebsbedingungen passieren, dass einzelne Datentelegramme erst verzögert zum Empfänger gelangen und beispielsweise einen betätigten Zustimmtaster oder einen unbetätigten Stopp-Schalter signalisieren, obwohl tatsächliche inzwischen ein anderer Betätigungszustand vorliegt und in aktuellen Datentelegrammen kodiert ist.

Durch das Verfahren nach Anspruch 32 wird ebenfalls ein zusätzliches Prüfkriterium eingeführt, mit dem in gewissem Umfang nicht mehr aktuelle Datentelegramme identifiziert werden können. Eine fortlaufenden Nummerierung der Datentelegramme ermöglicht eine eindeutige chronologische Reihung, so dass der zuletzt gültig ausgewertete Nachrichteninhalt nicht durch einen älteren Nachrichteninhalt überschrieben werden kann.

Mit dem Verfahren nach Anspruch 33 wird ein weiteres Prüfkriterium zur Absicherung der Kommunikation eingeführt, mit dem eine fehlerhafte Zuordnung beispielsweise zufolge einer älteren, fehlerhaft, d.h. nur an der Datenübertragungsgegenstelle abgebauten Verbindung mit einer weiteren mobilen Bedienvorrichtung verhindert werden kann.

Mit den bevorzugten sicheren Verfahren nach den Ansprüchen 33 bis 36 ist sichergestellt, dass bei einer Unterbrechung der Datenverbindung zwischen Bedienvorrichtung und Datenübertragungsgegenstelle und damit einhergehendem Kontrollverlust der Bedienperson unabhängig von der Ursache alle laufenden sicherheitskritischen Prozesse umgehend abgebrochen werden und die technische Einrichtung in einen sicheren Zustand übergeführt wird.

Durch das vorteilhafte Verfahren nach Anspruch 37 wird sichergestellt, dass nach erfolgter Anmeldung beziehungsweise Zuordnung einer Bedienperson zu einer steuerbaren technischen Einrichtung, zu einer sicheren Datenübertragungsgegenstelle und einem zugeordneten zulässigen Arbeitsbereich nur die innerhalb dieses Arbeitsbereiches abgegebenen sicherheitskritischen Steuerkommandos auch umgesetzt werden.

Die Aufgabe der Erfindung wird durch die Merkmale gemäß Anspruch 38 gelöst, durch welche eine sichere Datenübertragungsgegenstelle geschaffen ist.

Die sichere Datenübertragungsgegenstelle nach Anspruch 38 bildet den datentechnischen Kommunikationspartner gegenüber einer mobilen Bedienvorrichtung nach einem der Ansprüche 1 bis 26 und stellt unabhängig von den zwischengeschalteten Übertragungsmedien gemeinsam mit der Bedienvorrichtung eine eindeutige und sicherheitstechnisch garantierte Punkt-zu-Punkt Verbindung her. Analog zur mobilen Bedienvorrichtung ist auch die Datenübertragungsgegenstelle mit zumindest zwei Prozessoren oder Überwachungsschaltkreisen ausgestattet, welche die über die Datenverbindung eingehenden Datentelegramme unabhängig von einander hinsichtlich ihrer Herkunft und Fehlerfreiheit prüfen und darin eingebettete Nachrichten auswerten und entsprechende Signale oder Daten in den Sicherheitskreis der technischen Einrichtung einspeisen. Durch diese Zweikreisigkeit wird wiederum dem Sicherheitskonzept der Einfehlersicherheit Rechnung getragen. Wesentlich ist, dass diesen Prozessoren oder Überwachungsschaltkreisen bereits vor dem Aufbau einer sicheren Verbindung zu einer mobilen Bedienvorrichtung Sicherheitskodes zur Verfügung stehen, die eindeutig zu Markierungskodierungen von Einwahlmarkierungen, Zonenmarkierungen oder Schlüsselmarkierungen zugeordnet sind und mit denen die gültige Kennzeichnung eines Datentelegramms durch eine zugeordnete Markierungskodierung eindeutig verifiziert werden kann. Die Sicherheitskodierung kann im einfachsten Fall der zugeordneten Markierungskodierung entsprechen und kann durch einen einfachen Identitätsvergleich eine gültige Kennzeichnung festgestellt werden. Es können jedoch auch komplexe Kennzeichnungsmechanismen mit auf einander abgestimmten Kodepaaren zum Verschlüsseln und Entschlüsseln von Datentelegrammen Verwendung finden.

Durch die vorteilhafte Ausgestaltung nach Anspruch 39 kann die Sicherheitskodierung permanent in der Datenübertragungsgegenstelle gehalten werden. Insbesondere kann eine zulässige Sicherheitskodierung bereits vom Hersteller fest vorgegeben und eine unveränderliche Paarung von Einwahlmarkierung und Datenübertragungsstelle bereits vom Hersteller dieser Komponenten vorgenommen werden.

Durch die vorteilhafte Ausgestaltung nach Anspruch 40 kann die Datenübertragungsstelle auch für den sicher zugeordneten Empfang von Datentelegrammen verwendet werden, deren Nachrichten nicht nur die Sicherheitsschaltelemente beziehungsweise den Sicherheitskreis betreffen, sondern auch solche, die für die eigentliche Steuerung der technischen Einrichtung bestimmt sind und an diese mit oder auch ohne Kennzeichnung und Prüfung an die Steuerung weitergeleitet werden.

Durch die Ausgestaltung nach Anspruch 41 ist eine eindeutige, permanente und sichere datentechnische Zuordnung zwischen der Datenübertragungsgegenstelle und der Steuerung der technischen Einrichtung hergestellt. Nachrichten von der mobilen Bedienvorrichtung an die Steuerung, welche zuvor sicher zugeordnet an die Datenübertragungsgegenstelle übermittelt werden, werden damit ebenso sicher zugeordnet an die Steuerung weitergeleitet.

Durch die bauliche Ausgestaltung nach Anspruch 42 wird eine sichere Datenübertragungsgegenstelle geschaffen, welche unmittelbar mit der Steuerung der technischen Einrichtung platzsparend kombinierbar ist. Weiters ist dadurch die Integration in ein modular gestaltetes Steuerungskonzept ermöglicht und ist insbesondere auch die einfache Nachrüstbarkeit einer bestehenden Steuerung ermöglicht. Dies ist vor allem für Steuerungen für dem Anlagenbau vorteilhaft.

Durch die bauliche Ausgestaltung nach Anspruch 43 ist eine platzsparende und kostengünstige Integration der Datenübertragungsgegenstelle in die Steuerung ermöglicht. Dies ist insbesondere für Steuerungen im Bereich der Werkzeugmaschinen, Roboter, Spritzgießmaschinen oder dergleichen vorteilhaft, wo eine größere Anzahl gleicher und speziell optimierter Steuerungen für im wesentlichen gleiche Maschinen eingesetzt werden.

Die Ausgestaltung nach Anspruch 44 und 45 schafft eine kompakte bauliche Einheit mehrerer zur Umsetzung der Erfindung erforderlicher oder zweckmäßiger Komponenten, wodurch der Installationsaufwand verringert wird. Insbesondere eignet sich eine derartige bauliche Einheit für das einfache nachträgliche Ersetzen einer vorbestehenden Anschlussstelle für leitungsgebundene mobile Bedieneinrichtungen.

Durch die vorteilhaften Ausgestaltungen nach einem der Ansprüche 46 bis 48 werden gebräuchliche Schnittstellen für die technisch anschlusskompatible Anbindung der Datenübertragungsgegenstelle an den Sicherheitskreis der technischen Einrichtung bereitgestellt.

Eine bevorzugte Ausführungsform ist nach Anspruch 49 gegeben. Dabei ist eine Daten- oder Signalverbindung zwischen dem ersten und zweiten Prozessor oder Überwachungsschaltkreis vorgesehen, über welche jeder der beiden Bausteine dem jeweils anderen den von ihm erfassten Sicherheitszustand signalisiert und der jeweils andere diesen signalisierten Zustand mit dem eigenen erfassten Zustand vergleicht. Nur wenn sowohl der selbst erfasste als auch der signalisierte Sicherheitszustand einen betätigten Zustimmtaster oder einen unbetätigten Stopp-Schalter kennzeichnen, wird dieser Zustand vom jeweiligen Prozessor oder Überwachungsschaltkreis auch an den Sicherheitskreis signalisiert.

Durch die vorteilhafte und besonders sichere Ausgestaltung nach Anspruch 50 wird sichergestellt, dass ein Defekt oder Fehler zufolge einer Störung oder eines Schaltungs- oder Softwarefehlers nicht in beiden Prozessoren oder Überwachungsschaltkreisen gleichzeitig auftritt und das Prinzip der Einfehlersicherheit gewahrt ist.

Durch die vorteilhafte Ausgestaltung nach Anspruch 51 wird die technische Zuverlässigkeit und Sicherheit erhöht.

Die vorteilhafte Ausgestaltung nach Anspruch 52 ermöglicht die drahtlose datentechnische Anbindung einer mobilen Bedienvorrichtung wodurch Flexibilität und Bewegungsfreiheit der Bedienperson verbessert werden. Durch die Verwendung bekannter und weltweit standardisierter Funkstandards wird überdies eine kostengünstige, zuverlässige und weltweit zugelassene Technologie eingesetzt.

Durch die vorteilhafte Ausgestaltung nach Anspruch 53 ist sichergestellt, dass bei abgeschalteter oder defekter Energieversorgung der Datenübertragungsgegenstelle keine sicherheitskritischen Maschinenoperationen ausgelöst oder ausgeführt werden können.

Es zeigen:
- Fig. 1: einen Ausschnitt eines industriellen Fertigungssystems mit mehreren steuerbaren technischen Einrichtungen als einen möglichen Anwendungsfall der erfindungsgemäßen Verfahren und Vorrichtungen;
- Fig. 2: schematisch und beispielhaft die wesentlichen Komponenten einer erfindungsgemäßen sicheren mobilen Bedienvorrichtung;
- Fig. 3: schematisch und beispielhaft die wesentlichen Komponenten einer erfindungsgemäßen sicheren Datenübertragungsgegenstelle;
- Fig. 4a: eine beispielhafte Einwahlmarkierung als vereinfachtes Blockschaltbild;
- Fig. 4b: eine beispielhafte Schlüsselmarke als vereinfachtes Blockschaltbild;

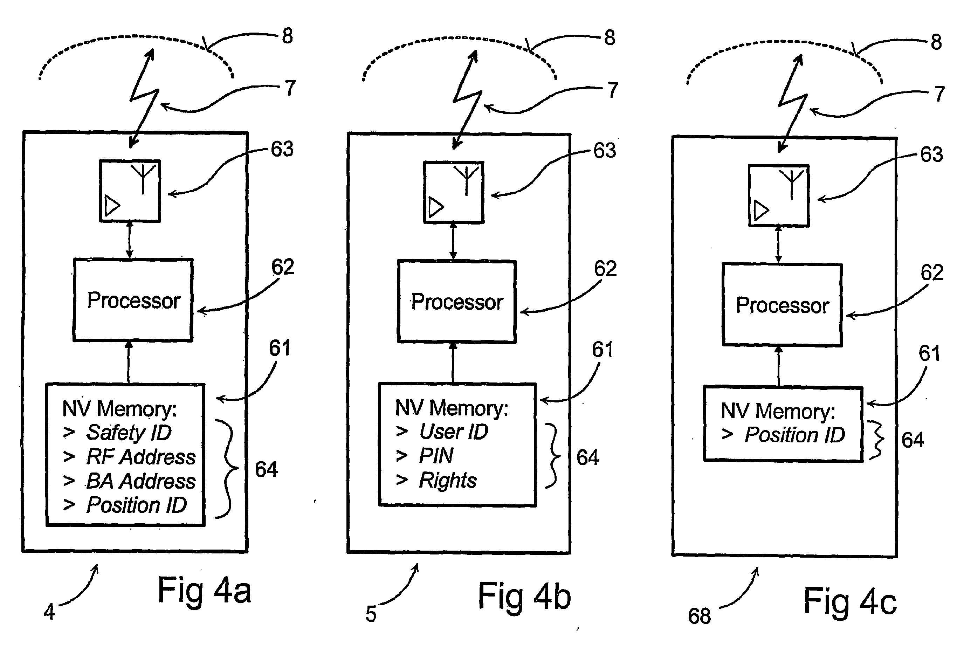

- Fig. 4 c: eine beispielhafte Zonenmarkierung als vereinfachtes Blockschaltbild.

Einführend sei festgehalten, dass in den beschriebenen, unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen, unterschiedlichen Ausführungsbeispielen für sich eigenständige, erfinderische oder erfindungsgemäße Lösungen darstellen.

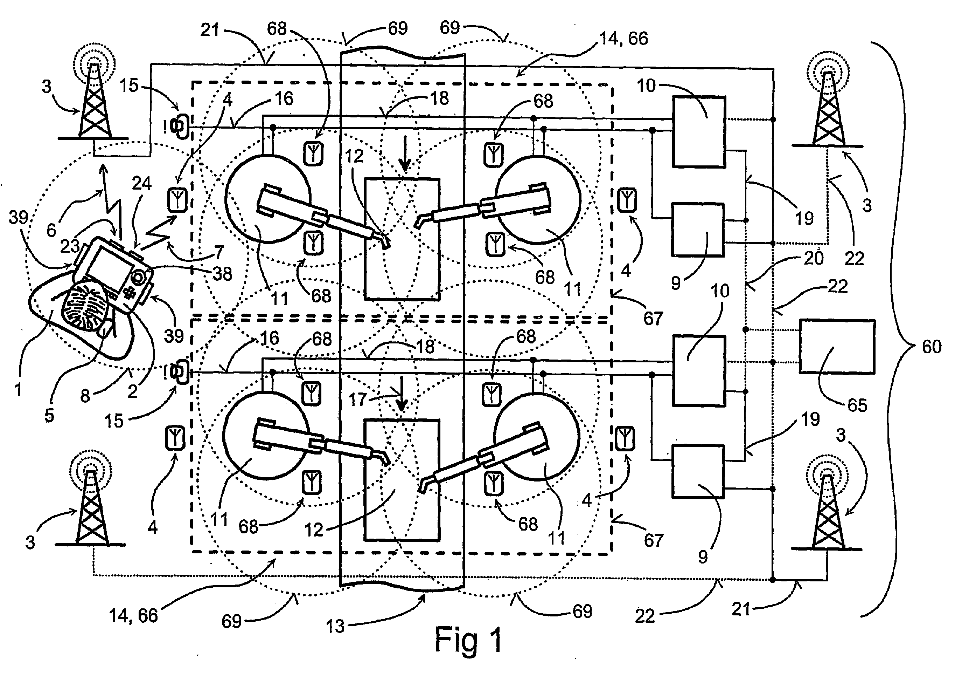

In Fig. 1 ist beispielhaft und schematisch vereinfacht ein Ausschnitt eines industriellen Systems 60 zur Fertigung oder Bearbeitung von Werkstücken 12 unter Zusammenwirken mehrerer automatisiert programmgesteuerter Manipulatoren 11 dargestellt. Die Werkstücke 12 werden durch ein Transportmittel 13 von einer Bearbeitungszelle 66 in die nächste befördert.

Im dargestellten Beispiel werden jeweils zwei der Manipulatoren 11 von einer gemeinsamen Steuerung 10 über entsprechenden Steuer- und Sensorverbindungen 18 gesteuert. Selbstverständlich können den Manipulatoren alternativ auch jeweils individuelle Steuerungen zugeordnet sein.

Die jeweils zwei gemeinsam gesteuerten Manipulatoren 11 sind einer gemeinsamen Sicherheitszone 14 zugeordnet, welche räumlich häufig mit einer Bearbeitungszelle 66 oder Bearbeitungsstation übereinstimmt und meist durch entsprechende Schutzzäune, Schutztüren, Gitter oder Absperrungen 67 auch entsprechend wahrnehmbar abgegrenzt ist.

Schaltungstechnisch ist eine Sicherheitszone 14 ein Bereich, dem zumindest ein oder gegebenenfalls mehrere, normalerweise fest verdrahtete Sicherheitsschaltelemente in der Art eines Not-Aus Schalters 15 und entsprechende sicherheitsgerichtete Signalübertragungsmittel, gesamtheitlich als Sicherheitskreis 16 dargestellt, zugeordnet sind. Durch Auslösen eines der zugeordneten Sicherheitsschaltelemente 15 durch eine Person werden alle Manipulatoren 11, Maschinen- und Anlagenteile in der jeweiligen Sicherheitszone 14 zuverlässig und umgehend in einen sicheren Betriebszustand, insbesondere in den Stillstand versetzt. Dadurch können erkannte bestehende oder drohende Gefahrensituationen abgewehrt werden beziehungsweise ungewollte Maschinenoperationen sicher unterbunden werden.

In großen Fertigungsanlagen 60 werden die Steuerungen 10 mehrerer Bearbeitungszellen 66 normalerweise mittels Datennetzwerk 20 datentechnisch miteinander und gewöhnlich auch mit einer zentralen Rechenanlage, beziehungsweise einem Server 65, beispielsweise zum Zweck einer zentralen Betriebsdatenerfassung, verbunden. Darüber hinaus können über eine solche zentrale Rechenanlage auch Fernwartung oder Ferndiagnosen durchgeführt werden, zentral organisierte Softwareupdates für die Steuerungen 10 und gegebenenfalls für die mobilen Bediengeräte 2 durchgeführt werden sowie spezifische Parameter- und Datensätze, insbesondere Benutzer-, Werkzeug- und Maschinenprofile anlagenübergreifend verwaltet werden. Das dargestellte Fertigungssystem weist weiters eine mobile Bedienvorrichtung 2 in der Art eines mobilen Handbediengerätes auf, mit welchem eine Bedienperson 1 wechselweise die Steuerung von Manipulatoren 11 und Anlagenteile in den verschiedenen Bearbeitungszellen 66 übernehmen kann. Während dieser Zeit befinden sich die Anlagenteile der jeweilige Bearbeitungszelle nicht im vollautomatischen Betrieb mit einer Absicherung durch die geschlossene Absperrung 67, sondern in einer abgesicherten Sonderbetriebsart, in der die Bedienperson sich auch innerhalb der Absperrung 67, beispielsweise für genaue Programmier- und Einstellarbeiten oder für Serviceaufgaben, aufhalten kann. In der abgesicherten Sonderbetriebsart sind sicherheitskritische Maschinenoperationen nur während der aktiven Betätigung eines Zustimmtasters 39 am Handbediengerät 2 durch die Bedienperson 1 ermöglicht. Zusätzlich weist das Handbediengerät einen Stopp-Schalter oder Not-Aus Schalter 38 auf, bei dessen Betätigung alle Maschinenteile in der jeweiligen Sicherheitszone 14 umgehend in einen sicheren Zustand übergeführt werden.

Die mobile Bedienvorrichtung 2 ist datentechnisch vorzugsweise drahtlos über eine integrierte Funkschnittstelle 23, eine Funkdatenverbindung 6 und eine entsprechende fest installierte Funkgegenstellen 3 und weiters über eine fest verdrahtete Datenleitung 21 mit einer sicheren Datenübertragungsgegenstellen 9 verbunden. Dabei kann einer Datenübertragungsgegenstelle 9 entweder genau eine Funkgegenstelle 3 zugeordnet sein, beziehungsweise diese sogar baulich kombiniert ausgebildet sein, oder aber zur sicheren flächendeckenden Funkanbindung in weitläufigen Anlagen 60 eine Mehrzahl mittels Datennetzwerk 22 verbundener Funkgegenstellen 3 und gegebenenfalls mehrerer sicherer Datenübertragungsgegenstellen 9 ausgebildet sein.

Die sichere Datenübertragungsgegenstelle 9 ist fest verdrahtet in den Sicherheitskreis 16 der jeweiligen Sicherheitszone 14 beziehungsweise der Bearbeitungszelle 66 eingebunden. Sie leitet die Betätigungs- beziehungsweise Schaltzustände der Sicherheitsschaltelemente 38, 39 einer aktuell datentechnisch angebundenen mobilen Bedienvorrichtung 2 zuverlässig an den Sicherheitskreis 16 weiter.

Zusätzlich ist vorzugsweise eine Datenverbindung 19 zwischen der Datenübertragungsgegenstelle 9 und der Steuerung 10 vorgesehen. Mittels dieser Datenverbindung 19 können allgemeine, nicht spezifisch sicherheitskritische Kommandos oder Informationen von der mobilen Bedienvorrichtung 2 über die Datenübertragungsgegenstelle 9 an die Steuerung übermittelt werden und fallweise zur Absicherung der Kommunikation die selben Mechanismen genutzt werden, mit denen auch die sicherheitskritischen Nachrichten abgesichert werden. Die Datenübertragung ist natürlich auch in umgekehrter Richtung beziehungsweise bidirektional von der Steuerung 10 über die Datenübertragungsgegenstelle 9 an die mobile Bedienvorrichtung 2 möglich, so dass insbesondere Visualisierungs-, Betriebs- und Diagnoseinformationen übertragen und über geeignete Ausgabemittel der mobilen Bedienvorrichtung 2 ausgegeben werden können. Die Datenverbindung 19 kann entweder als eindeutige Punkt-zu-Punkt Verbindung zwischen genau einer Datenübertragungsgegenstelle 9 und genau einer Steuerung 10 ausgebildet sein, oder aber als komplettes Netzwerk 20 mehrere Steuerungen 10, Datenübertragungsgegenstellen 9 sowie gegebenenfalls einen zentralen Server 65 mit einander verbinden. Prinzipiell kann die Datenverbindung 19 aber auch komplett entfallen, wenn die Steuerungen 10 unmittelbar an das Netzwerk 22 angebunden sind und alle nicht sicherheitskritischen Informationen zu und von der Steuerung 10 nicht über die Datenübertragungsgegenstellen 9 sondern direkt über die Funkgegenstellen 3 von und zu der mobilen Bedienvorrichtung 2 übertragen werden.

Den einzelnen Bearbeitungszellen 66 sind jeweils eine oder mehrere elektronisch erfassbare und kodierte Einwahlmarkierungen 4 räumlich zugeordnet. Die räumliche Zuordnung erfolgt dabei dergestalt, dass für die Bedienperson unmittelbar augenscheinlich erkennbar ist, zu welcher Bearbeitungszelle eine bestimmte Einwahlmarkierung zugeordnet ist. Gleichzeitig sind diese Einwahlmarkierungen datentechnisch über eindeutige Sicherheitskodierungen, welche sowohl in den Einwahlmarkierungen als auch in den Datenübertragungsgegenstellen permanent gespeichert sind, eindeutig jeweils genau einer sicheren Datenübertragungsgegenstelle 9 und damit eindeutig genau einer Sicherheitszone 14 zugeordnet.

Der Bedienperson 1 ist wiederum eine ebenfalls elektronisch erfassbare Schlüsselmarke 5 räumlich sowie datentechnisch zugeordnet. Die räumliche Zuordnung erfolgt dadurch, dass die Schlüsselmarke 5 an die Bedienperson 1 ausgehändigt und von dieser bei sich getragen wird. Die datentechnische Zuordnung erfolgt durch eine die Person eindeutig identifizierende Benutzerkennung der Schlüsselmarke sowie gegebenenfalls eines zugeordneten Passwortes.

Zur Festlegung eines zulässigen Arbeitsbereiches, von welchem aus sicherheitskritische Steuerkommandos abgegeben und ausgeführt werden können, sind in diesem Arbeitsbereich mehrere Zonenmarkierungen 68 angeordnet. Sie weisen bezüglich einer in der Bedienvorrichtung 2 integrierten Lesevorrichtung 24 eine bestimmte Erfassungsdistanz 69 auf, innerhalb welcher eine Zonenmarkierung 68 von der Leseeinrichtung 24 beziehungsweise der mobilen Bedienvorrichtung 2 sicher erfasst werden kann. Die Zonenmarkierungen 68 sind innerhalb des festgelegten Arbeitsbereiches derart angeordnet, dass sich die Erfassungsbereiche der Zonenmarkierungen teilweise überlappen und an jeder Stelle des Arbeitsbereiches zumindest eine Zonenmarkierung 68 von der mobilen Bedienvorrichtung 2 sicher erfasst werden kann.

Die mobile Bedienvorrichtung weist als besonderes Merkmal die Leseeinrichtung 24 mit im Vergleich zur Nutzdatenverbindung 6 nur kurzer, lokal begrenzter Erfassungsreichweite 8 auf. Diese Leseeinrichtung 24 ist sowohl zur Erfassung der Einwahhnarkierungen 4 als auch der Schlüsselmarken 5 und der Zonenmarkierungen 68 beziehungsweise der den jeweiligen Markierungen zugewiesenen Kodierungen geeignet.

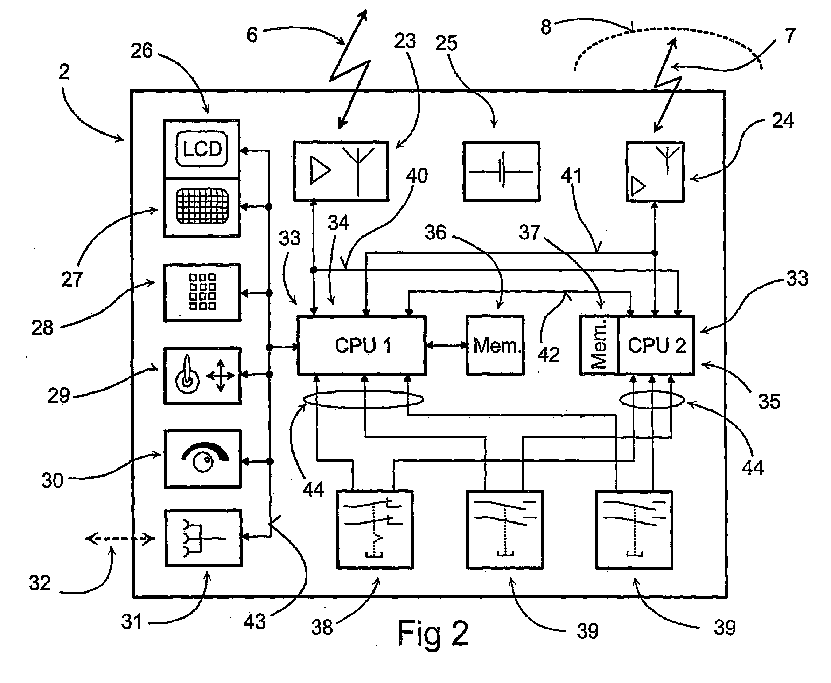

In Fig. 2 ist nun beispielhaft eine erfindungsgemäße mobile Bedienvorrichtung 2 mit ihren wesentlichen und typischen funktionalen Komponenten und datentechnischen Verbindungen dargestellt.

Zur zeitweiligen Herstellung einer datentechnischen Wirkverbindung 6 mit einer steuerbaren technischen Einrichtung weist die Bedienvorrichtung 2 eine entsprechende Schnittstelle, insbesondere eine zur drahtlosen datentechnischen Anbindung geeignete Funkschnittstelle 23 auf. Selbstverständlich ist alternativ auch eine entsprechende leitungsgebundene datentechnische Anbindung, beispielsweise via Ethernet, möglich und auch üblich.

Zusätzlich zur Schnittstelle 23 für die eigentliche Nutzdatenverbindung 6 ist eine Leseeinrichtung 24 mit lokal begrenzter Erfassungsreichweite 8 zur elektronischen Erfassung von Einwahlmarkierungen 4, Schlüsselmarken 5 und Zonenmarkierungen 68 vorgesehen. Vorzugsweise ist die Leseeinrichtung 24 samt den verwendeten Markierungen 4, 5 und 68 für eine kontaktlose Erfassung ausgebildet.

Weiter verfügt die mobile Bedienvorrichtung über speziell ausgeführte Sicherheitsschaltelemente in der Art eines Not-Aus oder Stop-Schalters 38 mit bekannter mechanischer Verriegelung in der betätigten Stellung sowie gegebenenfalls über einen oder mehrere Zustimmtaster 39. Die Zustimmtaster 39 sind während der Ausführung sicherheitskritischer Operationen in der Sonderbetriebsart der steuerbaren technischen Einrichtung von der Bedienperson 1 ständig betätigt zu halten, so dass diese Zustimmtaster 39 vorzugsweise in einem Griffbereich der mobilen Bedienvorrichtung 2 integriert sind und mit jener Hand, mit der die mobile Bedienvorrichtung 2 gehalten wird gleichzeitig auch zu betätigen sind. Sind mehrere Griffbereiche vorgesehen, um die Bedienvorrichtung 2 je nach Situation unterschiedlich halten zu können oder um eine ergonomische Handhabung sowohl für Rechts- als auch für Linkshänder zu ermöglichen, so ist üblicherweise jedem dieser Griffbereiche ein Zustimmtaster 39 zugeordnet. Die Sicherheitsschaltelemente 38, 39 sind, wie in der Darstellung angedeutet, meist zweikreisig ausgeführt, weisen also mehrere gleichzeitig und unabhängig ausgelöste Kontakte auf.

Weiter verfügt die mobile Bedienvorrichtung 2 über einen ersten Prozessor oder Erfassungsschaltkreis 33, welcher fortwährend eigenständig die Betätigungs- beziehungsweise Schaltzustände der Sicherheitsschaltelemente 38, 39 über entsprechende Signalleitungen 44 erfasst und in entsprechenden Datentelegrammen für die Versendung über die Nutzdatenverbindung 6 kodiert.

Parallel dazu ist ein zweiter Prozessor oder Erfassüngsschaltkreis 35 vorgesehen, der fortwährend, eigenständig und unabhängig vom ersten Prozessor 34 die Schaltzustände der Sicherheitsschaltelemente 38, 39 über entsprechende Signalleitungen erfasst und in entsprechenden Datentelegrammen für die Versendung über die Nutzdatenverbindung 6 kodiert.

Beide Prozessoren oder Erfassungsschaltkreise 33, 34 können ebenfalls unabhängig von einander auf die Leseeinrichtung 24 über eine Datenleitung 41 zugreifen beziehungsweise den von der Leseeinrichtung 24 generierten Datenstrom erfassen. Anstatt der einen Leseeinrichtung, auf welche beide Prozessoren unabhängig zugreifen können, kann alternativ natürlich auch eine zusätzliche zweite Leseeinrichtung vorgesehen sein und jeder der beiden Prozessoren auf jeweils eine der Leseeinrichtungen exklusiv zugreifen.

Zum Ablegen von spezifischen, im Zuge eines erfindungsgemäßen Anmeldeverfahrens aus Einwahlmarkierungen 4 oder aus Schlüsselmarken 5 über die Leseeinrichtung 24 gelesenen

Sicherheitskodierungen sind den beiden Prozessoren oder Erfassungsschaltkreisen 34, 35 jeweils unabhängige Speicher 36 und 37 zugeordnet.

Vorzugsweise sind die beiden Prozessoren 34 und 35 unterschiedlich ausgeführt, gehören unterschiedliche Prozessorfamilien an, verwenden unterschiedliche Software und unterschiedliche Technologien. Damit ist sichergestellt, dass ein einzelner Fehler zufolge eines Hardware- oder Softwarefehlers oder aufgrund äußerer Störeinflüsse sich nicht gleichzeitig auf beide Prozessoren auswirkt und nicht beide gleichzeitig und fehlerhaft Datentelegramme absetzen können, welche einen unbetätigten Not-Aus oder Stopp-Schalter beziehungsweise einen betätigten Zustimmtaster kennzeichnen.

Üblicherweise ist einer der Prozessoren oder Erfassungsschaltkreise 34 vergleichsweise leistungsfähig ausgeführt und übernimmt neben der Erfassung der Betätigungszustände der Sicherheitsschaltelemente 38, 39 auch noch die Kommunikation mit weiteren Peripheriekomponenten der mobilen Bedieneinrichtung 2, beispielsweise einem grafikfähigen Display 26 zur ansprechenden Visualisierung von Maschinen- und Prozesszuständen, einem mit dem Display 26 baulich kombinierten berührungssensitiven Schirm 27 für die Umsetzung flexibler und anspruchsvoller Bedienkonzepte, einem Tastenfeld 28 sowie verschiedenen analogen Eingabemitteln wie einem Joystick 29 oder einem Handrad 30. Es kann auch eine Schnittstelle 31 für die Verwendung irgendwelcher Erweiterungsmodule vorgesehen sein. Dabei kann es sich beispielsweise um austauschbare Speichermodule, insbesondere Compact Flash Speicher, USB Memory Sticks oder um spezielle Schnittstellenmodule in der Art von Ethernet - Netzwerkkarten handeln. Dieser leistungsfähige Prozessor übernimmt auch zumindest einen Großteil der Kommunikation über die Nutzdatenschnittstelle 23 zur Steuerung einer datentechnisch angebundenen steuerbaren technischen Einrichtung beziehungsweise zur Visualisierung der entsprechenden Daten und Zustände. Entsprechend der erforderlichen Leistungsbandbreite weist dieser erste Prozessor meistens einen separat angeordneten größeren Speicher 36 auf.

Der zweite Prozessor oder Erfassungsschaltkreis 35 weist üblicherweise eher geringe Verarbeitungsleistung auf und ist vorzugsweise nur für die zusätzliche und unabhängige Erfassung und Kodierung der Betätigungszustände der Sicherheitsschaltelemente 38, 39 vorgesehen. Vielfach genügt dafür ein einfacher Mikrocontroller mit einem bereits im Mikrocontroller integrierten kleinen Arbeitsspeicher 37. Alternativ kann die Aufgabe des zweiten Prozessors beispielsweise durch einen programmierbaren Logikbaustein erfüllt werden.

Natürlich können alternativ auch zwei unabhängige, relativ einfache Prozessoren oder Erfassungsschaltkreisen ausschließlich die sicherheitsrelevanten Funktionen übernehmen und die bezüglich der erforderlichen Rechenleistung aufwändigeren Funktionen rund um die Visualisierung von einem weiteren dritten Prozessor übernommen werden.

Zwischen dem ersten und zweiten Prozessor oder Erfassungsschaltkreis ist vorzugsweise auch eine direkte Daten- oder Signalverbindung 42 vorgesehen. Über diese Verbindung können Informationen zwischen den Prozessoren 34 und 35 beispielsweise für einen Kreuzvergleich der unabhängig erfassten Betätigungszustände der Sicherheitsschaltelemente ausgetauscht werden, Parametrierungs- oder Initialisierungsvorgänge durchgeführt werden. Ebenso können über diese Datenverbindung sicherheitsbezogene Nachrichten, welche für sich entsprechend durch eine Sicherheitskodierung gekennzeichnet und durch Prüfinformationen gekapselt sind, von einem der beiden Prozessoren an den jeweils anderen übermittelt und von diesem dann entweder unmittelbar über die Schnittstelle 23 ausgegeben oder in weiteren von diesem anderen Prozessor erstellten Datentelegrammen eingebettet und gemeinsam übermittelt werden.

Weitere, in prozessorbasierten Geräten mit erhöhten Anforderungen an die Zuverlässigkeit übliche Komponenten, wie z.B. Watchdog-Timer oder dergleichen, sind dem Fachmann hinlänglich bekannt und der besseren Übersichtlichkeit wegen nicht dargestellt.

Da die erfindungsgemäßen mobilen Bedienvorrichtungen vorzugsweise als drahtlos datengekoppelte mobile Handbediengeräte ausgeführt sind, ist ein entsprechender Energiespeicher 25, insbesondere ein elektrochemischer Energiespeicher, vorgesehen. Damit können die Komponenten der mobilen Bedienvorrichtung zumindest zeitweise unabhängig von einer leitungsgebundenen Energieversorgung betrieben werden und wird so eine größtmögliche Mobilität der Bedienperson sichergestellt. Die Verbindungen zur Energieversorgung der Komponenten wurden zum Vorteil der besseren Übersichtlichkeit in der Fig. 2 nicht dargestellt und sind dem Fachmann ohnedies bekannt. Dies gilt auch für Komponenten, die dem Austauschen oder Regenerieren des Energiespeichers 25 oder der entsprechenden Aufbereitung der gespeicherten Energie dienen.

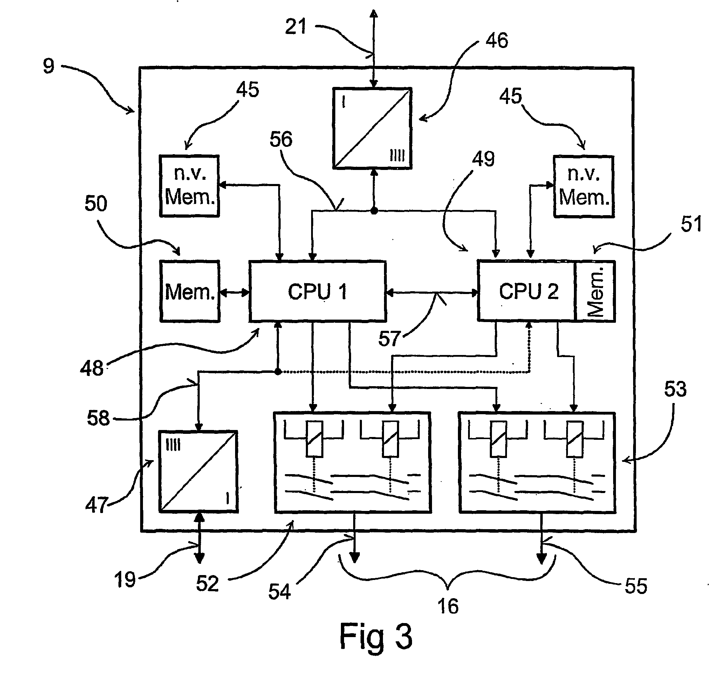

In Fig. 3 ist eine ebenfalls erfindungsgemäße sichere Datenübertragungsgegenstelle 9 mit ihren wesentlichen und typischen Komponenten beispielhaft und schematisch dargestellt.

Die Datenübertragungsgegenstelle 9 weist eine Schnittstelle 46 zur zeitweiligen Herstellung einer Datenverbindung 21 zu einer mobilen Bedienvorrichtung für die Übertragung zumindest von sicherheitskritischen Betätigungs- oder Signalzuständen auf. Dabei können entlang dieser Datenverbindung 21 verschiedene Datenübertragungsmittel, beispielsweise eine Sende- und Empfangseinrichtung für Funkwellen, Netzwerkkomponenten oder dergleichen zwischengeschaltet sein.

Es sind auch zwei Schnittstellen 52 und 53 in Form von Schaltausgängen für eine fest verdrahtete signaltechnische Einbindung der Datenübertragungsgegenstelle in den Sicherheitskreis 16 einer steuerbaren technischen Einrichtung vorgesehen. Die Schnittstelle 52 ist in den Not-Aus Sicherheitskreis 54 eingebunden, die Schnittstelle 53 ist in den Zustimm-Sicherheitskreis 55 eingebunden. Wie die verwendeten Symbole der Schnittstellen bereits andeuten, sind diese Schnittstellen vorzugsweise sowohl nach außen in Richtung Sicherheitskreis 16 als auch nach Innen in Richtung der Ansteuerung zweikreisig sicher ausgeführt. Alternativ können anstatt der symbolisch dargestellten elektromagnetischen Schaltausgänge auch ähnlich sicher ausgestaltete elektronische Schaltausgänge vorgesehen sein oder ebenfalls alternativ oder auch ergänzend zu den Schaltausgängen 52 und 53 eine speziell sicher ausgestaltete Datenschnittstelle zur fest verdrahteten datentechnischen Anbindung an einen speziellen Sicherheitsbus vorgesehen sein. Die dargestellten elektromechanischen Schaltausgänge weisen neben einer zuverlässigen galvanischen Trennung auch den Vorteil auf, dass bei Ausfall der Energieversorgung der Datenübertragungsgegenstelle der Not-Aus- 54 und der Zustimmkreis 55 sicher geöffnet werden und damit die steuerbare technische Einrichtung umgehend in einen sicheren Betriebzustand übergeführt wird.

Analog zur sicheren zweikreisigen Erfassung und Kodierung der Betätigungszustände der Sicherheitsschaltelemente in einer erfindungsgemäßen mobilen Bedienvorrichtung durch einen ersten und zweiten Prozessor oder Erfassungsschaltkreis ist auch die elektronische Datenauswertung in der Datenübertragungsgegenstelle 9 zweikreisig ausgeführt. Dabei werden die sicherheitskritischen Signalzustände von zumindest einem dritten und einem vierten Prozessor oder Überwachungsschaltkreis 48 und 49 entsprechend der über die Schnittstelle 46 empfangenen Datentelegramme unabhängig zweikreisig empfangen, geprüft und in den Sicherheitskreis eingebunden.

Beiden Prozessoren 48 und 49 sind jeweils entsprechende Arbeitsspeicher 50 und 51 zugeordnet. Weiter sind beiden Prozessoren jeweils nichtflüchtige Speicher 45 zugeordnet, in denen zumindest eine oder mehrere registrierte Sicherheitskodierungen sowie entsprechende Daten zu einer bestehenden aktiven datentechnischen Verbindung zu einer mobilen Bedienvorrichtung und gegebenenfalls zu einer spezifischen Bedienperson energieausfallssicher gespeichert sind. Alle erwähnten Speicher können sowohl als eigenständige Bauelemente ausgebildet oder aber auch fix in den jeweiligen Prozessoren integriert sein.

Zwischen den beiden Prozessoren 48 und 49 kann auch eine spezielle Daten- oder Signalverbindung 57 zum Austausch von Informationen vorgesehen sein. Sie kann beispielsweise für einen fortwährenden Kreuzvergleich der unabhängig festgestellten Betätigungs- oder Signalzustände beziehungsweise der intern in den Bausteinen festgestellten Sicherheitszustände verwendet werden.

Über die zusätzliche Datenschnittstelle 47 kann zumindest einer der beiden Prozessoren der Datenübertragungsgegenstelle Daten mit der Steuerung 10 austauschen, welche auch nicht sicherheitskritischen Steuerkommandos und Visualisierungsfunktionen betreffen und welche von der Datenübertragungsstelle nicht speziell ausgewertet oder inhaltlich verarbeitet, sondern nur zwischen mobiler Bedieneinrichtung und Steuerung weitergeleitet werden. Damit kann die sichere Punkt-zu-Punkt Verbindung zwischen mobiler Bedienvorrichtung 2 und Datenübertragungsgegenstelle 9 auch für diese Daten genutzt werden. Vorzugsweise wird die Datenverbindung 19 zwischen Datenübertragungsgegenstelle 9 und Steuerung 10 als eindeutige Punkt-zu-Punkt Verbindung ohne irgendwelche weiteren Teilnehmer oder mit fest eingerichteter protokollarischer Absicherung der Punkt-zu-Punkt Zuordnung eingerichtet. Dadurch ist durch die eindeutige und exklusive Zuordnung einer Bedienvorrichtung zur Datenübertragungsgegenstelle 9 gleichzeitig auch die eindeutige und exklusive Zuordnung zur Steuerung 10 sichergestellt.

Weitere übliche Komponenten wie beispielsweise Netzteil und Stromanschluss oder etwa auch Watchdog-Timer für die Prozessoren sind aus Gründen der besseren Übersichtlichkeit in der Fig. 3 nicht dargestellt und dem Fachmann hinsichtlich ihrer Ausgestaltung, Einbindung und Wirkung hinlänglich bekannt.

In Fig. 4a, 4b und 4c sind beispielhaft und schematisch eine elektronisch erfassbare Einwahlmarkierung 4, eine elektronisch erfassbare Schlüsselmarke 5, sowie eine Zonenmarkierung 68 dargestellt.

Sowohl die Einwahlmarkierung 4 als auch die Schlüsselmarke 5 und die Zonenmarkierung 68 sind in diesem Beispiel in der Art von RF Transpondermarken ausgebildet (RFID), welche via eine elektromagnetische Funkverbindung 7 mit lokal begrenzter Reichweite 8 bzw. 69 von einer entsprechend ausgestalteten Leseeinrichtung elektronisch erfasst werden können.

Signaltechnisch sind sowohl Einwahlmarkierung als auch die Schlüsselmarke und die Zonenmarkierung gleich gestaltet und weisen neben der Funkdatenschnittstelle 63 einen einfachen Prozessor 62 sowie einen nichtflüchtigen Speicher 64 auf. Die Energieversorgung für diese Komponenten ist in den Figuren nicht dargestellt und kann entsprechend dem allgemeinen bekannten Stand der Technik beispielsweise in so genannten aktiven Transpondern mittels eines elektrochemischen Energiespeichers erfolgen oder wie bei ebenso bekannten passiven Transpondern aus unmittelbar in die Sende-/Empfangseinrichtung einwirkende externe elektromagnetische Funksignalen gewonnen werden.

Der nichtflüchtige Speicher 61 hält die spezifischen Kodierungen 64 der Markierung permanent gespeichert.

Bei Einwahlmarkierungen 4 sind im nichtflüchtigen Speicher 61 zumindest eine Sicherheitskodierung (Safety ID) sowie gegebenenfalls Adressinformationen (RF Address, BA Address) zum Aufbau der Datenverbindung einer mobilen Bedienvorrichtung zur der Einwahlmarkierung 4 zugeordneten Datenübertragungsgegenstelle oder auch Positions- oder Zoneninformationen (Position ID) gespeichert. Diese Positionsinformation kann dabei einerseits eine Information betreffend der eigenen Position der Einwahlmarkierung darstellen, andererseits aber auch eine Kennzeichnung eines der Einwahlmarkierung zugeordneten Arbeitsbereiches sein, welcher durch entsprechende Zonenmarkierungen festgelegt und elektronisch erfassbar gekennzeichnet ist. Damit ist eine zuverlässige Zuordnung zwischen der Einwahlposition und dem zulässigen Arbeitsbereich hergestellt.

Bei Schlüsselmarken 5 sind im nichtflüchtigen Speicher 61 zumindest eine Benutzerkennung (USER ID) sowie gegebenenfalls weitere Informationen zum zugeordneten Benutzer oder zum Verifizieren von PIN- oder Passworteingaben oder auch zu individuell zugeordneten Benutzerrechten (Rights) gespeichert.

Bei Zonenmarkierungen 68 ist im nichtflüchtigen Speicher 61 zumindest eine Positions- beziehungsweise Zonenkodierung (Position ID) gespeichert. Diese Zonenkodierung kann für mehrere benachbart angeordnete Zonenmarkierungen innerhalb eines bestimmten Arbeitsbereiches beziehungsweise innerhalb einer Fertigungszelle identisch sein und damit nur einen bestimmten Arbeitsbereich als solchen kennzeichnen, oder aber innerhalb eines Arbeitsbereiches durch Vergabe unterschiedlicher, gegebenenfalls zusätzlicher, Positionsinformationen eine detailliertere Positionsbestimmung ermöglichen. Wenn die Zonenkodierung lediglich einen bestimmten Arbeitsbereich kennzeichnet, können durch Zuweisung mehrerer Zonenkodierungen auch unterschiedliche und teilweise überlappende Arbeitsbereiche definiert werden.

Die nichtflüchtigen Speicher 61 können sowohl einmalig programmierbar oder auch mehrfach programmierbar ausgestaltet sein oder überhaupt eine bereits vom Hersteller fest und unveränderlich vorgegebene eineindeutige Kodierung tragen.

Der Ordnung halber sei abschließend darauf hingewiesen, dass zum besseren Verständnis des Aufbaus der Vorrichtungen diese beziehungsweise deren Bestandteile teilweise unmaßstäblich und/oder vergrößert und/oder verkleinert dargestellt wurden.

Die vorhergehend beschriebenen, beispielhaft ausgeführten Vorrichtungen sind zur Durchführung der angegebenen Verfahren geeignet. Die angeschlossenen Ansprüche sind in Verbindung mit dem einleitenden Teil der vorliegenden Beschreibung auch als Beschreibungsteile anzusehen.

Die den eigenständigen erfinderischen Lösungen zugrunde liegende Aufgabe kann der Beschreibung entnommen werden.

Vor allem können die einzelnen in den Fig. 1; 2; 3; 4a; 4b; 4c gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

## Patentansprüche

1. Mobile Bedienvorrichtung (2), insbesondere mobiles Handbediengerät, zur Beeinflussung zumindest eines Teiles einer steuerbaren technischen Einrichtung (60), mit zumindest einem Bedienelement für die Abgabe von Steuerkommandos durch eine Bedienperson (1), mit zumindest einer Datenschnittstelle zum zeitweiligen Herstellen einer datentechnischen Wirkverbindung zu einer der steuerbaren technischen Einrichtung zugeordneten, sicheren Datenübertragungsgegenstelle (9), unter Zwischenschaltung von zumindest einem standardisierten Datenübertragungsmittel ohne physikalisch sichergestellter eindeutiger Punkt-zu-Punkt Zuordnung der Teilnehmer, mit einem ersten Prozessor oder Erfassungsschaltkreis (34) zum Kodieren von Informationen, Nachrichten oder Signalzuständen in eine Mehrzahl von ersten Datentelegrammen" welche für eine Übertragung über die datentechnische Wirkverbindung an die sichere Datenübertragungsgegenstelle (9) vorgesehen sind, **dadurch gekennzeichnet, dass** die mobile Bedienvorrichtung (2) einen zweiten Prozessor oder Erfassungsschaltkreis (35) und eine Leseeinrichtung (24) aufweist, wobei die Leseeinrichtung im Wesentlichen zur gleichzeitigen Erfassung mehrerer elektronische lesbarer Markierungskodierungen, zufolge mehrerer im Erfassungsbereich der Leseeinrichtung befindlichen Einwahlmarkierungen (4), Zonenmarkierungen (68) oder Schlüsselmarken (5) eingerichtet ist, und wobei der zweite Prozessor oder Erfassungsschaltkreis (35) zum Kodieren der Informationen, Nachrichten oder Signalzuständen in eine Mehrzahl von ersten Datentelegrammen oder in eine Mehrzahl von zweiten Datentelegrammen ausgebildet ist, welche ersten und gegebenenfalls zweiten Datentelegramme für eine Übertragung über die datentechnische Wirkverbindung an die sichere Datenübertragungsgegenstelle (9) vorgesehen sind und wobei der erste (34) und zweite (35) Prozessor oder Erfassungsschaltkreis über die Leseeinrichtung (24) auf die erfassten Markierungskodierungen zugreifen können, und die ersten und/oder gegebenenfalls zweiten Datentelegramme beeinflusst von den erfassten Markierungskodierungen generiert, gekennzeichnet oder versendet werden.

2. Mobile Bedienvorrichtung nach Anspruch 1, **dadurch gekennzeichnet, dass** die zumindest eine Datenschnittstelle zur bidirektionalen Datenübertragung ausgebildet ist.

3. Mobile Bedienvorrichtung nach Anspruch 1 oder 2, **dadurch gekennzeichnet, dass** die zumindest eine Datenschnittstelle zur Herstellung einer Funkdatenverbindung, insbesondere nach dem Wireless LAN (WLAN), dem Bluetooth oder ZigBee Standard, ausgebildet ist.

4. Mobile Bedienvorrichtung nach Anspruch 1 oder 2, **dadurch gekennzeichnet, dass** die zumindest eine Datenschnittstelle zur Herstellung einer Verbindung zu einem leitungsgebundenen Netzwerk oder zu einem Bussystem mit mehreren Teilnehmern, insbesondere zu einem Ethernet Netzwerk ausgebildet ist.

5. Mobile Bedienvorrichtung nach einem der Ansprüche 1 bis 4, **dadurch gekennzeichnet, dass** die Bedienvorrichtung einen elektrochemischen oder elektrostatischen Energiespeicher (25), insbesondere einen Akkumulator, eine Batterie, eine Brennstoffzelle oder einen Kondensator zur zumindest zeitweiligen Energieversorgung zumindest eines Teiles der elektronischen Komponenten aufweist.

6. Mobile Bedienvorrichtung nach einem der Ansprüche 1 bis 5, **dadurch gekennzeichnet, dass** zumindest ein von der Bedienperson betätigbares Sicherheitsschaltelement zur Abgabe sicherheitskritische Steuerkommandos oder zum Freigeben oder Unterbinden potenziell gefährdender Maschinenoperationen vorgesehen ist, der Betätigungszustand des zumindest einen Sicherheitsschaltelementes von dem ersten (34) und zweiten (35) Prozessor oder Erfassungsschaltkreis wiederholt erfasst wird und der erfasste Betätigungszustand in den ersten und gegebenenfalls zweiten Datentelegrammen kodiert wird.

7. Mobile Bedienvorrichtung nach Anspruch 6, **dadurch gekennzeichnet, dass** das zumindest eine Sicherheitsschaltelement elektrisch mehrkreisig, insbesondere zweikreisig ausgeführt ist.

8. Mobile Bedienvorrichtung nach Anspruch 7, **dadurch gekennzeichnet, dass** das zumindest eine Sicherheitsschaltelement als normgerecht gekennzeichneter Not-Aus Schalter (38), als alternativ gekennzeichneter Maschinen-Stop Schalter, als Zustimmtaster oder als sicherer Betriebsartenwahlschalter ausgebildet ist.

9. Mobile Bedienvorrichtung nach einem der Ansprüche 6 bis 8, **dadurch gekennzeichnet, dass** mehrere Sicherheitsschaltelemente vorgesehen sind.

10. Mobile Bedienvorrichtung nach Anspruch 9, **dadurch gekennzeichnet, dass** mehrere, insbesondere zwei Sicherheitsschaltelemente mit jeweils gleicher Funktionalität vorgesehen sind, deren Betätigungszustände jeweils von dem ersten (34) und dem zweiten (35) Prozessor oder Erfassungsschaltkreis erfasst werden, die erfassten Betätigungszustände entsprechend der Funktion der Sicherheitsschaltelemente von dem ersten (34) und zweiten (35) Prozessor oder Erfassungsschaltkreis zu einem Gesamtbetätigungszustand logisch verknüpft werden, und der Gesamtbetätigungszustand in den ersten und gegebenenfalls zweiten Datentelegrammen kodiert wird.

11. Mobile Bedienvorrichtung nach einem der Ansprüche 6 bis 10, **dadurch gekennzeichnet, dass** zwischen dem ersten (34) und dem zweiten (35) Prozessor oder Erfassungsschaltkreis eine Signalverbindung oder eine Datenverbindung (42) vorgesehen ist, über welche Informationen für einen kreuzweisen Vergleich des jeweils erfassten Betätigungszustandes des zumindest einen Sicherheitsschaltelementes übertragen werden.

12. Mobile Bedienvorrichtung nach einem der Ansprüche 1 bis 11, **dadurch gekennzeichnet, dass** die Leseeinrichtung (24) zur im Wesentlichen gleichzeitigen Erfassung mehrerer unterschiedlicher Markierungskodierungen aus einer einzelnen Einwahlmarkierung (4), Zonenmarkierung (68) oder Schlüsselmarke (5) geeignet ist.

13. Mobile Bedienvorrichtung nach Anspruch 12, **dadurch gekennzeichnet, dass** die Leseeinrichtung (24) zur Erfassung mehrerer Sicherheitskodierungen, insbesondere einer ersten und einer davon unterschiedlichen zweiten Sicherheitskodierung ausgebildet ist und der erste Prozessor oder Erfassungsschaltkreis (34) und der zweite Prozessor oder Erfassungsschaltkreis (35) jeweils unterschiedliche Sicherheitskodierungen zur Kennzeichnung der Datentelegramme verwenden.

14. Mobile Bedienvorrichtung nach einem der Ansprüche 1 bis 13, **dadurch gekennzeichnet, dass** die Leseeinrichtung (24) keine oder nur derart eingeschränkte Mittel zur Zwischenspeicherung gelesener Daten aufweist, welche die vollständige Speicherung eines vollständigen und mit Prüfinformationen versehenen Datensatzes, welcher eine Markierungskodierung enthält, keinesfalls ermöglicht.

15. Mobile Bedienvorrichtung nach einem der Ansprüche 1 bis 14, **dadurch gekennzeichnet, dass** der Speicher (36) in dem die gelesene Sicherheitskodierung zugreifbar gespeichert wird, als flüchtiger Speicher ausgebildet ist und nach dem Ausschalten des Bediengerätes etwaig gespeicherte Sicherheitskodierungen nicht wiederherstellbar gelöscht sind.

16. Mobile Bedienvorrichtung nach einem der Ansprüche 1 bis 15, **dadurch gekennzeichnet, dass** die Leseeinrichtung (24) eine gerichtete Erfassungscharakteristik aufwei st.

17. Mobile Bedienvorrichtung nach einem der Ansprüche 1 bis 16, **dadurch gekennzeichnet, dass** die Leseeinrichtung (24) als Transponder-Empfangseinrichtung ausgebildet ist.

18. Mobile Bedienvorrichtung nach einem der Ansprüche 1 bis 16, **dadurch gekennzeichnet, dass** die Leseeinrichtung (24) als Barcode-Reader ausgebildet ist.

19. Mobile Bedienvorrichtung nach einem der Ansprüche 1 bis 16, **dadurch gekennzeichnet, dass** die Leseeinrichtung (24) als Empfänger für gepulstes oder moduliertes Licht, insbesondere Infrarotlicht, ausgebildet ist.

20. Mobile Bedienvorrichtung nach einem der Ansprüche 1 bis 19, **dadurch gekennzeichnet, dass** die Leseeinrichtung (24) die Unterschreitung einer Mindestdistanz zu einer Schlüsselmarke (5), einer Einwahlmarkierung (4) oder einer Zonenmarkierung (68) im Erfassungsbereich signalisiert oder entsprechende Entfernungsinformationen bereitstellt.

21. Mobile Bedienvorrichtung nach einem der Ansprüche 1 bis 20, **dadurch gekennzeichnet, dass** die Leseeinrichtung (24) die Überschreitung einer Maximaldistanz zu einer Schlüsselmarke (5), einer Einwahlmarkierung (4) oder einer Zonenmarkierung (68) im Erfassungsbereich signalisiert oder entsprechende Entfernungsinformationen bereitstellt.

22. Mobile Bedienvorrichtung nach einem der Ansprüche 1 bis 21, **dadurch gekennzeichnet, dass** der erste (34) und der zweite (35) Prozessor oder Erfassungsschaltkreis unabhängig von einander auf die Leseeinrichtung (24) zugreifen können.

23. Mobile Bedienvorrichtung nach einem der Ansprüche 1 bis 22, **dadurch gekennzeichnet, dass** der erste (34) und der zweite (35) Prozessor oder Erfassungsschaltkreis diversitär ausgestaltet sind sowie gegebenenfalls zugeordnete Softwaremittel oder programmierte Logikverknüpfungen diversitär ausgestaltet sind.

24. Mobile Bedienvorrichtung nach einem der Ansprüche 1 bis 23, **dadurch gekennzeichnet, dass** zumindest ein Ausgabemittel, insbesondere in Art eines grafikfähigen Displays (26), vorgesehen ist.

25. Mobile Bedienvorrichtung nach einem der Ansprüche 1 bis 24, **dadurch gekennzeichnet, dass** zumindest ein analog oder quasi analog wirkendes Eingabemittel, insbesondere in Art eines Touch-Screen (27), eines Joystick (29), eines Handrades (30) oder eines Potentiometers vorgesehen ist.

26. Betriebsverfahren zum sicheren Betreiben einer zeitweiligen datentechnischen Wirkverbindung von einer mobilen Bedienvorrichtung (2), mit zumindest einem Bedienelement für die Abgabe von Steuerkommandos durch eine Bedienperson (1), zumindest zu einem Sicherheitskreis einer steuerbaren technischen Einrichtung (60) und gegebenenfalls zu einer Steuerung (10) einer technischen Einrichtung, wobei die Bedienvorrichtung (2) zumindest eine Datenschnittstelle aufweist, zum zeitweiligen Herstellen einer datentechnischen Wirkverbindung zu einer der steuerbaren technischen Einrichtung zugeordneten, sicheren Datenübertragungsgegenstelle (9), unter Zwischenschaltung eines Datenübertragungsmittels, insbesondere eines Bussystems oder eines Netzwerkes ohne physikalisch sichergestellter eindeutiger Punkt-zu-Punkt Zuordnung der Nachrichtenquellen und Nachrichtensenken, sowie unter Zwischenschaltung einer sicheren Datenübertragungsgegenstelle (9), welche permanent in den Sicherheitskreis eingebunden ist, wobei die mobile Bedienvorrichtung (2) ferner einen ersten Prozessor oder Erfassungsschaltkreis (34) zum Kodieren von Informationen, Nachrichten oder Signalzuständen in eine Mehrzahl von ersten Datentelegrammen aufweist, welche für eine Übertragung über die datentechnische Wirkverbindung an die sichere Datenübertragungsgegenstelle (9) vorgesehen sind, **dadurch gekennzeichnet, dass** die mobile Bedienvorrichtung (2) einen zweiten Prozessor oder Erfassungsschaltkreis (35) und eine Leseeinrichtung (24) aufweist, wobei die Leseeinrichtung (24) im Wesentlichen zur gleichzeitigen Erfassung mehrerer elektronisch lesbarer Markierungskodierungen, zufolge mehrerer im Erfassungsbereich der Leseeinrichtung befindlichen Einwahlmarkierungen (4), Zonenmarkierungen (68) oder Schlüsselmarken (5) eingerichtet ist und von dem ersten Prozessor oder Erfassungsschaltkreis (34) sowie dem zweiten Prozessor oder Erfassungsschaltkreis (35) Datentelegramme generiert werden, diese Datentelegramme mit einer zuvor, durch Zugriff über die Leseeinrichtung (24), von einer Einwahlmarkierung (4) gelesenen und im Bediengerät (2) registrierten Sicherheitskodierung oder mit einer mittels der gelesenen Sicherheitskodierung geprüften und registrierten Verbindungskennung gekennzeichnet werden, die Datentelegramme an die sichere Datenübertragungsgegenstelle (9) übertragen werden, in der sicheren Datenübertragungsgegenstelle die empfangenen Datentelegramme hinsichtlich einer gültigen Kennzeichnung entsprechend einer im Speicher der Datenübertragungsgegenstelle (9) registrierten Sicherheitskodierung und/oder entsprechend einer mittels der Sicherheitskodierung geprüften und registrierten Verbindungskodierung geprüft werden, und bei übereinstimmung mit einer registrierten Sicherheitskodierung und/oder registrierten Verbindungskodierung die Signale oder Daten für den Sicherheitskreis entsprechend dem Informationsgehalt der Datentelegramme eingestellt beziehungsweise in den Sicherheitskreis eingespeist werden.

27. Betriebsverfahren nach Anspruch 26, **dadurch gekennzeichnet, dass** der erste (34) und der zweite (35) Prozessor oder Erfassungsschaltkreis wiederholt und unabhängig voneinander den Schaltzustand eines im mobilen Bediengerät (2) angeordneten Sicherheitsschaltelementes, insbesondere eines elektrisch mehrkreisig ausgeführten Sicherheitsschaltelementes erfassen und in den generierten Datentelegrammen kodieren.

28. Betriebsverfahren nach Anspruch 26 oder 27, **dadurch gekennzeichnet, dass** zwischen dem ersten (34) und dem zweiten (35) Prozessor oder Erfassungsschaltkreis Informationen oder Signale für einen kreuzweisen Vergleich betreffend den unabhängig festgestellten Schaltzustand des Sicherheitsschaltelementes ausgetauscht und für die Festlegung des in den Datentelegrammen kodierten Schaltzustandes berücksichtigt werden.

29. Betriebsverfahren nach einem der Ansprüche 26 bis 28, **dadurch gekennzeichnet, dass** der erste (34) und zweite (35) Prozessor oder Erfassungsschaltkreis die Datentelegramme unabhängig voneinander generieren und kennzeichnen und diese Datentelegramme in der Datenübertragungsgegenstelle (9) von jeweils einem korrespondierend zugeordneten dritten (48) und vierten (49) Prozessor oder Überwachungsschaltkreis jeweils unabhängig voneinander geprüft werden und dass an den Sicherheitskreis der steuerbaren technischen Einrichtung (60) ein nicht sicherer Zustand signalisiert wird, sobald einer der unabhängig arbeitenden dritten (48) und vierten (49) Prozessoren oder Überwachungsschaltkreise einen nicht sicheren Zustand anhand der geprüften Datentelegramme feststellt.

30. Betriebsverfahren nach einem der Ansprüche 26 bis 29, **dadurch gekennzeichnet, dass** zwischen dem dritten (48) und dem vierten (49) Prozessor oder Überwachungsschaltkreis Informationen oder Signale für einen Kreuzvergleich betreffend den aus den Datentelegrammen ermittelten Sicherheitszustand ausgetauscht (57) und für die in den Sicherheitskreis eingespeisten Signale oder Daten berücksichtigt werden.

31. Betriebsverfahren nach einem der Ansprüche 26 bis 30, **dadurch gekennzeichnet, dass** bei der Erstellung der Datentelegramme im mobilen Bediengerät (2) zusätzlich Zeitinformationen eingebunden werden und diese Zeitinformationen bei der Überprüfung der Kennzeichnung der Datentelegramme in der sicheren Datenübertragungsgegenstelle (9) als zusätzliches Prüfkriterium herangezogen werden.

32. Betriebsverfahren nach einem der Ansprüche 26 bis 31, **dadurch gekennzeichnet, dass** bei der Erstellung der Datentelegramme im mobilen Bediengerät (2) zusätzlich Sequenzinformationen, insbesondere eine fortlaufende Nummerierung, eingebunden werden und diese Sequenzinformationen bei der Überprüfung der Kennzeichnung der Datentelegramme in der sicheren Datenübertragungsgegenstelle (9) als zusätzliches Prüfkriterium herangezogen werden.

33. Betriebsverfahren nach einem der Ansprüche 26 bis 32, **dadurch gekennzeichnet, dass** bei der Erstellung der Datentelegramme in der mobilen Bedienvorrichtung (2) zusätzlich eine der Bedienvorrichtung individuell zugeordnete eineindeutige Gerätekodierung eingebunden wird und diese Gerätekodierung bei der Überprüfung der Kennzeichnung der Datentelegramme in der sicheren Datenübertragungsgegenstelle (9) als zusätzliches Prüfkriterium herangezogen wird.

34. Betriebsverfahren nach einem der Ansprüche 26 bis 33, **dadurch gekennzeichnet, dass** beim Eintreffen eines gültig gekennzeichneten Datentelegramms in der sicheren Datenübertragungsgegenstelle (9) mit Informationen bezüglich dem Betätigungszustand eines Zustimmtasters der mobilen Bedienvorrichtung (2) ein Timer mit definierter Ablaufzeit neu gestartet wird und bei einem Ablauf des Timers ein Signalzustand beziehungsweise ein Datenwert für die Einbindung in den Sicherheitskreis so eingestellt wird, dass ein nicht betätigter Zustimmtaster signalisiert wird.

35. Betriebsverfahren nach einem der Ansprüche 26 bis 34, **dadurch gekennzeichnet, dass** beim Eintreffen eines gültig gekennzeichneten Datentelegramms in der sicheren Datenübertragungsgegenstelle (9) mit Informationen bezüglich dem Betätigungszustand eines Not-Aus Schalters oder eines Stopp-Schalters der mobilen Bedienvorrichtung (2) ein Timer mit definierter Ablaufzeit neu gestartet wird und bei einem Ablauf des Timers ein Signalzustand beziehungsweise ein Datenwert für die Einbindung in den Sicherheitskreis so eingestellt wird, dass ein betätigter Not-Aus Schalter oder Stopp-Schalter signalisiert wird.

36. Betriebsverfahren nach einem der Ansprüche 26 bis 35, **dadurch gekennzeichnet, dass** das Eintreffen eines gültig gekennzeichneten Datentelegramms in der sicheren Datenübertragungsgegenstelle (9) mit Informationen bezüglich dem Betätigungszustand eines Betriebsarten-Wahlschalters der mobilen Bedienvorrichtung (2) ein Timer mit definierter Ablaufzeit neu gestartet wird und bei einem Ablauf des Timers ein Signalzustand beziehungsweise ein Datenwert für die Einbindung in den Sicherheitskreis so eingestellt wird, dass eine ungültige Betriebsartenwahl signalisiert wird.

37. Betriebsverfahren nach einem der Ansprüche 26 bis 36, **dadurch gekennzeichnet, dass** fortwährend im Erfassungsbereich der Leseeinrichtung befindliche Zonenmarkierungen (68) erfasst, die darin kodierten Zonenkodierungen gelesen werden, die Zonenkodierungen auf Zugehörigkeit zu einem in der mobilen Bedienvorrichtung (2) oder in der sicheren Datenübertragungsgegenstelle (9) registrierten zulässigen Arbeitsbereich geprüft werden und bei festgestellter Nicht-Zugehörigkeit sämtlicher erfasster Zonenkodierungen oder für den Fall, dass keine Zonenmarkierung erfasst werden kann, die Ausführung sicherheitskritischer Steuerkommandos unterbunden wird.

38. Sichere Datenübertragungsgegenstelle eingerichtet zur Verwendung in einem Betriebsverfahren nach einem der Ansprüche 26 bis 37, für die sichere, zeitweilige datentechnische Ankopplung einer mobilen Bedienvorrichtung (2) zumindest an den Sicherheitskreis einer steuerbaren technischen Einrichtung (60) und gegebenenfalls an die Steuerung der technischen Einrichtung, mit einer ersten Datenschnittstelle zum Herstellen einer datentechnischen Wirkverbindung zu einer mobilen Bedienvorrichtung (2) unter Zwischenschaltung von zumindest einem Datenübertragungsmedium ohne physikalisch sichergestellter eindeutiger Punkt-zu-Punkt Zuordnung der Teilnehmer, mit einer oder mehreren Sicherheitsschnittstellen zum Einbinden der Datenübertragungsgegenstelle in den Sicherheitskreis der technischen Einrichtung (60), mit einem ersten Prozessor oder Überwachungsschaltkreis (48) zum Empfang einer Mehrzahl erster Datentelegramme über die erste Datenschnittstelle und einem zweiten Prozessor oder Überwachungsschaltkreis (49) zum gleichzeitigen Empfang einer Mehrzahl erster Datentelegramme und/oder gegebenenfalls zum Empfang einer Mehrzahl zweiter Datentelegramme über die erste Datenschnittstelle **dadurch gekennzeichnet, dass** dem ersten (48) und zweiten (49) Prozessor oder Überwachungsschaltkreis jeweils zugreifbare Speicher zugeordnet sind, in welchen zumindest ein registrierter zulässiger Sicherheitskode gespeichert ist, welcher Sicherheitskode einer der steuerbaren technischen Einrichtung (60) räumlich zugeordneten Einwahlmarkierung (4) oder Zonenmarkierung (68) oder welcher einer Bedienperson (1) zugewiesenen Schlüsselmarke (5) zugeordnet ist, welcher erste (48) und zweite (49) Prozessor oder Überwachungsschaltkreis jeweils unabhängig voneinander die empfangenen ersten und gegebenenfalls zweiten Datentelegramme hinsichtlich der eindeutigen Kennzeichnung durch einen dem gespeicherten zulässigen Sicherheitskode zugeordneten Markierungskode prüft und bei Übereinstimmung mit einem gespeicherten zulässigen Sicherheitscode die Informationen oder Nachrichten der empfangenen Datentelegramme auswertet und via zumindest eine Sicherheitsschnittstelle die Signalzustände oder Daten für den Sicherheitskreis in Abhängigkeit von den Informationen oder Nachrichten herstellt oder in den Sicherheitskreis einspeist.

39. Sichere Datenübertragungsgegenstelle nach Anspruch 38, **dadurch gekennzeichnet, dass** die zugreifbaren Speicher zumindest teilweise als nichtflüchtige Speicher (45) ausgebildet sind in welchen die zumindest eine registrierte zulässige Sicherheitskodierung permanent oder quasi permanent gespeichert ist.

40. Sichere Datenübertragungsgegenstelle nach Anspruch 38 oder 39, **dadurch gekennzeichnet, dass** eine zweite Datenschnittstelle (47) zur datentechnischen Ankopplung an die funktionale Steuerung (10) der technischen Einrichtung (60) vorgesehen ist.

41. Sichere Datenübertragungsgegenstelle nach Anspruch 40, **dadurch gekennzeichnet, dass** die zweite Datenschnittstelle (47) zur Herstellung einer eindeutigen und sicheren Punkt-zu-Punkt Datenverbindung mit der Steuerung (10) der technischen Einrichtung (60) ausgebildet ist.

42. Sichere Datenübertragungsgegenstelle nach einem der Ansprüche 38 bis 41, **dadurch gekennzeichnet, dass** die Datenübertragungsgegenstelle baulich mit der funktionalen Steuerung (10) der technischen Einrichtung (60) kombinierbar ist, insbesondere als Modul in das Gehäuse der Steuerung einsetzbar oder an das Gehäuse der Steuerung anreihbar ist.

43. Sichere Datenübertragungsgegenstelle nach einem der Ansprüche 38 bis 41, **dadurch gekennzeichnet, dass** die Datenübertragungsgegenstelle baulich und funktional unmittelbar in die funktionale Steuerung (10) der technischen Einrichtung (60) integriert ist.

44. Sichere Datenübertragungsgegenstelle nach einem der Ansprüche 38 bis 43, **dadurch gekennzeichnet, dass** die Datenübertragungsgegenstelle baulich und funktional mit einer Funkgegenstelle (3) kombiniert ist.

45. Sichere Datenübertragungsgegenstelle nach einem der Ansprüche 38 bis 44, **dadurch gekennzeichnet, dass** die Datenübertragungsgegenstelle baulich und funktional mit einer Einwahlmarkierung (4) kombiniert ist.

46. Sichere Datenübertragungsgegenstelle nach einem der Ansprüche 38 bis 45, **dadurch gekennzeichnet, dass** die Sicherheitsschnittstelle zur Einbindung in den Sicherheitskreis der technischen Einrichtung eine mehrkreisig ausgeführte Kontaktanordnung zur Einspeisung eines Zustimmtaster-Signalzustandes, eines Not-Aus oder Stopp-Signalzustandes und/oder eines Betriebsarten-Signalzustandes aufweist.

47. Sichere Datenübertragungsgegenstelle nach einem der Ansprüche 38 bis 46, **dadurch gekennzeichnet, dass** die Sicherheitsschnittstelle zur Einbindung in den Sicherheitskreis anstatt oder zusätzlich zur mehrkreisig ausgeführten Kontaktanordnung entsprechend mehrkreisig ausgeführte, potenzialbehaftete Signalausgänge aufweist.

48. Sichere Datenübertragungsgegenstelle nach einem der Ansprüche 38 bis 42, **dadurch gekennzeichnet, dass** die Sicherheitsschnittstelle zur Einbindung in den Sicherheitskreis der technischen Einrichtung für die Anbindung an einen Sicherheitsbus ausgebildet ist.

49. Sichere Datenübertragungsgegenstelle nach einem der Ansprüche 38 bis 48, **dadurch gekennzeichnet, dass** zwischen dem ersten (48) und dem zweiten (49) Prozessor oder Überwachungsschaltkreis eine Signalverbindung oder Datenverbindung vorgesehen ist, über welche Informationen für einen kreuzweisen Vergleich der ausgewerteten Informationen oder Nachrichten aus den ersten und gegebenenfalls den zweiten Datentelegrammen ausgetauscht werden können.

50. Sichere Datenübertragungsgegenstelle nach einem der Ansprüche 38 bis 49, **dadurch gekennzeichnet, dass** der erste (48) und der zweite (49) Prozessor oder Überwachungsschaltkreis diversitär ausgestaltet sind sowie gegebenenfalls zugeordnete Softwaremittel oder programmierte Logikverknüpfungen diversitär ausgestaltet sind.

51. Sichere Datenübertragungsgegenstelle nach einem der Ansprüche 38 bis 50, **dadurch gekennzeichnet, dass** der erste (48) und zweite (49) Prozessor oder Überwachungsschaltkreis vollkommen unabhängig vom jeweils anderen Prozessor oder Überwachungsschaltkreis an der Sicherheitsschnittstelle einen nicht sicheren Zustand signalisieren kann, insbesondere eine fehlende Zustimmung oder einen ausgelösten Not-Aus- oder Maschinen-stop-Zustand.

52. Sichere Datenübertragungsgegenstelle nach einem der Ansprüche 38 bis 51, **dadurch gekennzeichnet, dass** die erste Datenschnittstelle als Funkschnittstelle (46), insbesondere als Bluetooth Schnittstelle, WLAN Schnittstelle oder ZigBee Schnittstelle, ausgebildet ist.

53. Sichere Datenübertragungsgegenstelle nach einem der Ansprüche 38 bis 52, **dadurch gekennzeichnet, dass** im abgeschalteten oder energielosen Zustand der sicheren Datenübertragungsgegenstelle für den angeschlossenen Sicherheitskreis ein nicht betätigter Zustimmtaster, ein betätigter Not-Aus Schalter oder Stopp-Schalter oder eine ungültige Betriebsartenauswahl signalisiert wird.

## Claims

1. Mobile control device (2), in particular a mobile hand-held device, for influencing at least a part of a controllable technical system (60), with at least one control element for issuing control commands by an operator (1), with at least one data interface for temporarily establishing an active data connection to a safe data transmission counter station (9) assigned to the controllable technical system, with at least one standardized data transmission means without any physically safe unequivocal point-to-point assignment to the subscribers connected in between, with a first processor or detection circuit (34) for encoding information, messages or signal states in a plurality of first data telegrams with a view to transmitting them across the active data connection to the safe data transmission counter station (9), **characterised in that** the mobile control device (2) has a second processor or detection circuit (35) and a reading unit (24), and the reading unit is configured to read, essentially simultaneously, several electronically readable tag codes when several log-in tags (4), zone tags (68) or key tags (5) are disposed within the detection range of the reading unit, and the second processor or detection circuit (35) is configured to encode information, messages or signal states in a plurality of first data telegrams or in a plurality of second data telegrams, which first and optionally second data telegrams are intended for a transmission across the data interface via an active connection to the safe data transmission counter station (9), and the first (34) and second (35) processor or detection circuit is able to access the detected tag codes via the reading unit (24), and the first and/or optionally second data telegrams are generated, identified or sent under the influence of the detected tag codes.

2. Mobile control device as claimed in claim 1, **characterised in that** the at least one data interface is configured for bi-directional data transmission.

3. Mobile control device as claimed in claim 1 or 2, **characterised in that** the at least one data interface is configured for establishing a radio data link, in particular based on the Wireless LAN (WLAN), Bluetooth or ZigBee Standard.

4. Mobile control device as claimed in claim 1 or 2, **characterised in that** the at least one data interface is configured for establishing a connection to a cabled network or to a bus system with several subscribers, in particular to an Ethernet network.

5. Mobile control device as claimed in one of claims 1 to 4, **characterised in that** the control device has an electrochemical or electrostatic energy storage (25), in particular an accumulator, a battery, a fuel cell or a capacitor, for at least temporarily supplying power to at least some of the electronic components.

6. Mobile control device as claimed in one of claims 1 to 5, **characterised in that** at least one safety switch element which can be operated by the operator is provided for issuing safety critical control commands or authorizing or preventing potentially dangerous machine operations, the operating state of the at least one safety switch element is repeatedly detected by the first (34) and second (35) processor or detection circuit and the detected operating state is encoded in the first and optionally second data telegrams.

7. Mobile control device as claimed in claim 6, **characterised in that** the at least one safety switch element is of a multiple electric circuit design, in particular a two-circuit design.

8. Mobile control device as claimed in claim 7, **characterised in that** the at least one safety switch element is provided in the form of an emergency stop switch certified to standard, alternatively as a certified machine-stop switch, an ok key or a safe operating mode selection switch.

9. Mobile control device as claimed in one of claims 6 to 8, **characterised in that** several safety switch elements are provided.

10. Mobile control device as claimed in claim 9, **characterised in that** several, in particular two, safety switch elements each with identical functions are provided, the operating states of each of which are detected by the first (34) and the second (35) processor or detection circuit, the detected operating states are logically linked by the first (34) and second (35) processor or detection circuit to form an overall operating state depending on the function of the safety switch elements, and the overall operating state is encoded in the first and optionally second data telegrams.

11. Mobile control device as claimed in one of claims 6 to 10, **characterised in that** a signal connection or a data connection is provided between the first (34) and the second (35) processor or detection circuit, by means of which information is transmitted for a cross-comparison of the respective detected operating state of the at least one safety switch element.

12. Mobile control device as claimed in to one of claims 1 to 11, **characterised in that** the reading unit (24) is configured for detecting several different tag codes, essentially simultaneously, from an individual log-on tag (4), zone tag (68) or key tag (5).

13. Mobile control device as claimed in claim 12, **characterised in that** the reading unit (24) is configured for detecting several security codes, in particular a first security code and a second security code different from it, and the first processor or detection circuit (34) and the second processor or detection circuit (35) each use different security codes for encoding the data telegrams.

14. Mobile control device as claimed in one of claims 1 to 13, **characterised in that** the reading unit (24) has no or only restricted means for buffering read data, which under no circumstances enable full storage of the complete data set provided with check data contained in a tag code.

15. Mobile control device as claimed in one of claims 1 to 14, **characterised in that** the memory (36) in which the read security code can be stored for access is provided in the form of a volatile memory and when the control device is switched off, any security codes stored are deleted so that they cannot be recovered.

16. Mobile control device as claimed in one of claims 1 to 15, **characterised in that** the reading unit (24) has a directional detection characteristic.

17. Mobile control device as claimed in one of claims 1 to 16, **characterised in that** the reading unit (24) is provided in the form of a transponder-receiver system.

18. Mobile control device as claimed in one of claims 1 to 16, **characterised in that** reading unit (24) is provided in the form of a barcode reader.

19. Mobile control device as claimed in one of claims 1 to 16, **characterised in that** the reading unit (24) is provided in the form of a receiver for pulsed or modulated light, in particular infrared light.

20. Mobile control device as claimed in one of claims 1 to 19, **characterised in that** the reading unit (24) signals if there is a drop below a minimum distance to a key tag (5), log-on tag (4) or zone tag (68) in the detection range or provides appropriate information about distance.

21. Mobile control device as claimed in one of claims 1 to 20, **characterised in that** the reading unit (24) signals if a maximum distance from a key tag (5), log-on tag (4) or zone tag (68) in the detection range is exceeded or provides appropriate information about the distance.

22. Mobile control device as claimed in one of claims 1 to 21, **characterised in that** the first (34) and the second (35) processor or detection circuit are able to access the reading unit (24) independently of one another.

23. Mobile control device as claimed in one of claims 1 to 22, **characterised in that** the first (34) and the second (35) processor or detection circuit are differently configured and are optionally configured to operate different assigned software means or programmed logic links.

24. Mobile control device as claimed in one of claims 1 to 23, **characterised in that** at least one output means is provided, in particular in the form of a display (26) with graphics capability.

25. Mobile control device as claimed in one of claims 1 to 24, **characterised in that** at least one analogue input means or one operating in an analogue manner, as it were, is provided, in particular in the form of a touch screen (27), joystick (29), hand wheel (30) or potentiometer.

26. Operating method for safely operating a temporary active data connection from a mobile control device (2) with at least one control element for issuing control commands by an operator (1) to at least one safety loop of a controllable technical system (60) and optionally to a controller (10) of a technical system, and the control device (2) has at least one data interface for temporarily establishing an active data connection to a safe data transmission counter station (9) assigned to the controllable technical system, with an interconnected data transmission means, in particular a bus system or a network without a physically secured unequivocal point-to-point assignment of the message sources and message sinks, and with an interconnected safe data transmission counter station (9) which is permanently connected to the safety loop, and the mobile control device (2) also has a first processor or detection circuit (34) for encoding information, messages or signal states in a plurality of first data telegrams with a view to transmitting them across the active data connection to the safe data transmission counter station (9), **characterised in that** the mobile control device (2) has a second processor or detection circuit (35) and a reading unit (24), and the reading unit (24) is configured to read, essentially simultaneously, several electronically readable tag codes when several log-in tags (4), zone tags (68) or key tags (5) are disposed within the detection range of the reading unit, and data telegrams are generated by the first processor or detection circuit (34) and second processor or detection circuit (35), these data telegrams being identified with a previously read log-on tag (4) and a security code registered in the control device (2) or with a connection code checked and registered by means of the read security code, the data telegrams are transmitted to the safe data transmission counter station (9), the data telegrams received in the safe data transmission counter station are checked for a valid code corresponding to a security code registered in the memory of the data transmission counter station (9) and/or corresponding to a connection code checked by means of the security code and registered, and if a valid code is established, the signals or data for the safety loop are adjusted or fed into the safety loop in accordance with the data content of the data telegrams.

27. Operating method as claimed in claim 26, **characterised in that** the first (34) and the second (35) processor or detection circuit, repeatedly and independently of one another, detect the switch state of a safety switch element disposed in the mobile control device (2), in particular a safety switch based on an electrical multi-circuit design, and encode it in the generated data telegrams.

28. Operating method as claimed in claim 26 or 27, **characterised in that** information or signals for a cross-comparison relating to the independently detected switch state of the safety switch element are exchanged between the first (34) and the second (35) processor or detection circuit and taken into account when setting the switch state encoded in the data telegrams.

29. Operating method as claimed in one of claims 26 to 28, **characterised in that** the first (34) and second (35) processor or detection circuit generate and encode the data telegrams independently of one another and these data telegrams are checked in the data transmission counter station (9) independently of one another by a respective co-operating, assigned third (48) and fourth (49) processor or monitoring circuit, and a non-safe state is signalled to the safety loop of the controllable technical system (60) as soon as one of the independently operating third (48) and fourth (49) processors or monitoring circuits establishes a state that is not safe on the basis of the checked data telegrams.

30. Operating method as claimed in one of claims 26 to 29, **characterised in that** information or signals for a cross-comparison relating to the safety state determined from the data telegrams are exchanged (57) between the third (48) and the fourth (49) processor or monitoring circuit and taken into account for the signals or data fed into the safety loop.

31. Operating method as claimed in one of claims 26 to 30, **characterised in that**, when generating the data telegrams in the mobile control device (2), additional time-related information is incorporated and this time-related information is applied as an additional check criterion when the code of the data telegrams is checked in the safe data transmission counter station (9).

32. Operating method as claimed in one of claims 26 to 31, **characterised in that**, when generating the data telegrams in the mobile control device (2), additional sequence information, in particular a sequential numbering, is incorporated, and this sequence information is applied as an additional check criterion when the code of the data telegrams is checked in the safe data transmission counter station (9).

33. Operating method as claimed in one of claims 26 to 32, **characterised in that**, when generating the data telegrams in the mobile control device (2), an unequivocal device code individually assigned to the control device is incorporated, and this device code is applied as an additional check criterion when the code of the data telegrams is checked in the safe data transmission counter station (9).

34. Operating method as claimed in one of claims 26 to 33, **characterised in that**, when a validly coded data telegram arrives at the safe data transmission counter station (9) with information relating to the operating status of an ok key of the mobile control device (2), a timer with a defined sequence time is restarted, and during a sequence of the timer a signal state or a data value for connecting into the safety loop is set so that a non-operated ok key is signalled.

35. Operating method as claimed in one of claims 26 to 34, **characterised in that**, when a validly coded data telegram arrives at the safe data transmission counter station (9) with information relating to the operating state of an emergency stop switch or a stop switch of the mobile control device (2), a timer with a defined sequence time is restarted, and during a sequence of the timer a signal state or a data value for connecting into the safety loop is set so that an operated emergency stop switch or stop switch is signalled.

36. Operating method as claimed in one of claims 26 to 35, **characterised in that**, when a validly coded data telegram arrives at the safe data transmission counter station (9) with information relating to the operating state of an operating mode selection switch of the mobile control device (2), a timer with a defined sequence is restarted, and during the sequence of the timer a signal state or a data value for connecting into the safety loop is set so that an invalid operating mode selection is signalled.

37. Operating method as claimed in one of claims 26 to 36, **characterised in that** zone tags (68) disposed within the detection range of the reading unit are continuously detected, the zone codes encoded in them are read, the zone codes are checked to ascertain whether they belong to the permissible detection range registered in the mobile control device (2) or in the safe data transmission counter station (9), and if it is established that not all the detected zone codes belong or if no zone tag can be detected, the running of safety critical control commands is prevented.

38. Safe data transmission counter station configured for use in an operating method as claimed in one of claims 26 to 37, to provide a safe, temporary coupling of a mobile control device (2) to at least the safety loop of a controllable technical system (60) for data transmission purposes and optionally to the controller of the technical system, with a first data interface for establishing an active data connection to a mobile control device (2) with at least one data transmission medium without any interconnected, physically secured unequivocal point-to-point assignment of the subscribers with one or more safety interfaces for connecting the data transmission counter station to the safety loop of the technical system (60), with a first processor or monitoring circuit (48) for receiving a plurality of first data telegrams across the first data interface and a second processor or monitoring circuit (49) for simultaneously receiving a plurality of first data telegrams and/or optionally for receiving a plurality of second data telegrams across the first data interface, **characterised in that** the first (48) and second (49) processor or monitoring circuit are respectively provided with an accessible memory in which at least one registered permissible security code is stored, which security code is assigned to a log-on tag (4) or zone tag (68) spatially assigned to the controllable technical system (60) or which is assigned to a key tag (5) allocated to an operator (1), which first (48) and second (49) processor or monitoring circuit respectively check the received first and optionally second data telegrams independently of one another to establish the unequivocal code on the basis of a tag code assigned to the stored permissible security code and once the code is established, the information or messages of the received data telegrams are evaluated and the signal states or data for the safety loop are fed into the safety loop depending on the information or messages ascertained.

39. Safe data transmission counter station as claimed in claim 38, **characterised in that** the accessible memories are at least partially provided in the form of non-volatile memories (45) in which at least one registered permissible security code is permanently or virtually permanently stored.

40. Safe data transmission counter station as claimed in claim 38 or 39, **characterised in that** a second data interface (47) is provided for establishing a data connection to the functional controller (10) of the technical system (60).

41. Safe data transmission counter station as claimed in claim 40, **characterised in that** the second data interface (47) is configured to establish an unequivocal and safe point-to-point data connection with the controller (10) of the technical system (60).

42. Safe data transmission counter station as claimed in one of claims 38 to 41, **characterised in that** the data transmission counter station can be structurally combined with the functional controller (10) of the technical system (60), in particular can be inserted in the housing of the controller or mounted on the housing of the controller as a module.

43. Safe data transmission counter station as claimed in one of claims 38 to 41, **characterised in that** the data transmission counter station is structurally and functionally directly integrated in the functional controller (10) of the technical system (60).

44. Safe data transmission counter station as claimed in one of claims 38 to 43, **characterised in that** the data transmission counter station is structurally and functionally combined with a radio counter station (3).

45. Safe data transmission counter station as claimed in one of claims 38 to 44, **characterised in that** the data transmission counter station is structurally and functionally combined with a log-on tag (4).

46. Safe data transmission counter station as claimed in one of claims 38 to 45, **characterised in that** the security interface for connecting into the safety loop of the technical system has a contact arrangement based on multiple circuits for feeding in an ok key signal state, an emergency off or stop signal state and/or an operating mode signal state.

47. Safe data transmission counter station as claimed in one of claims 38 to 46, **characterised in that** the security interface for connecting into the safety loop has signal outputs which can be powered instead of or in addition to the contact arrangement based on multiple circuits.

48. Safe data transmission counter station as claimed in one of claims 38 to 42, **characterised in that** the security interface for connecting into the safety loop of the technical system is designed to be connected to a safety bus.

49. Safe data transmission counter station as claimed in one of claims 38 to 48, **characterised in that** a signal connection or data connection is provided between the first (48) and second (49) processor or monitoring circuit by means of which information for a cross-comparison of the evaluated information or messages from the first and optionally second data telegrams can be exchanged.

50. Safe data transmission counter station as claimed in one of claims 38 to 49, **characterised in that** the first (48) and second (49) processor or monitoring circuit are differently configured and optionally assigned software means or programmed logic links are also differently configured.

51. Safe data transmission counter station as claimed in one of claims 38 to 50, **characterised in that** the first (48) and second (49) processor or monitoring circuit are able to signal to the security interface a non-safe state, in particular the absence of authorization or a triggered emergency off or machine stop state, totally independently of the other respective processor or monitoring circuit.

52. Safe data transmission counter station as claimed in one of claims 38 to 51, **characterised in that** the first data interface is provided in the form of a radio interface (46), in particular a Bluetooth interface, WLAN interface or ZigBee interface.

53. Safe data transmission counter station as claimed in one of claims 38 to 52, **characterised in that** when the safe data transmission counter station is in the switched off or powerless state, a non-operated ok key, an operated emergency stop switch or stop switch or an invalid operating mode selection is signalled for the connected safety loop.

## Revendications

1. Dispositif de commande mobile (2), plus particulièrement, un appareil de commande manuel mobile pour l'actionnement d'au moins une partie d'un dispositif technique contrôlable (60), avec au moins un élément de commande pour l'envoi de commandes de contrôle par un opérateur (1), avec au moins une interface de données pour l'établissement temporaire d'une liaison active technique de données avec une unité distante de transmission de données sécurisée (9) correspondant au dispositif technique contrôlable, en interposant au moins un moyen de transmission de données standardisé sans attribution physique point par point garantie et univoque des participants, avec un premier processeur ou circuit d'acquisition (34) pour le codage d'informations, de messages ou d'états de signaux en une pluralité de premiers télégrammes de données, destinés à être transmis, par l'intermédiaire de la liaison active, à l'unité distante de transmission des données sécurisée (9), **caractérisé en ce que** le dispositif de commande mobile (2) comprend un deuxième processeur ou circuit d'acquisition (35) et un dispositif de lecture (24), moyennant quoi le dispositif de lecture est configuré principalement pour l'acquisition simultanée de plusieurs codages de marquages électroniques lisibles, conformément à plusieurs marquages de sélection (4), marquages de zones (68) ou maques-clés (5) se trouvant dans la zone d'acquisition du dispositif de lecture et moyennant quoi le deuxième processeur ou circuit d'acquisition (35) est conçu pour le codage des informations, messages ou états de signaux en une pluralité de premiers télégrammes de données ou en une pluralité de deuxièmes télégrammes de données, lesquels premiers et, le cas échéant, deuxièmes télégrammes de données étant destinés à être transmis, par l'intermédiaire de la liaison active technique de données, à l'unité distante de transmission des données sécurisée (9) et moyennant quoi le premier (34) et le deuxième (35) processeurs ou circuits d'acquisition peuvent accéder, par l'intermédiaire du dispositif de lecture (24), aux codages de marquages acquis, et les premiers et/ou le cas échéant les deuxièmes télégrammes de données sont générés, identifiés ou envoyés conformément aux codages de marquages acquis.

2. Dispositif de commande mobile selon la revendication 1, **caractérisé en ce que** l'au moins une interface de données est conçue pour une transmission bidirectionnelle des données.

3. Dispositif de commande mobile selon la revendication 1 ou 2, **caractérisé en ce que** l'au moins une interface de données est conçue pour l'établissement d'une liaison de données radio, notamment selon le standard Wireless LAN (WLAN), Bluetooth ou ZigBee.

4. Dispositif de commande mobile selon la revendication 1 ou 2, **caractérisé en ce que** l'au moins une interface de données est conçue pour l'établissement avec un réseau lié à des prestations ou un système de bus avec plusieurs participants, plus particulièrement un réseau Ethernet.

5. Dispositif de commande mobile selon l'une des revendications 1 à 4, **caractérisé en ce que** le dispositif de commande comprend un accumulateur d'énergie électrochimique ou électrostatique (25), plus particulièrement un accumulateur, une batterie, une cellule à combustible ou un condensateur pour l'alimentation en énergie au moins temporaire d'au moins une partie des composants électroniques.

6. Dispositif de commande mobile selon l'une des revendications 1 à 5, **caractérisé en ce qu'**au moins un élément de commutation de sécurité actionnable par l'opérateur est prévu pour l'envoi de commandes de contrôle techniques de sécurité ou pour l'autorisation ou l'interdiction d'opérations potentiellement dangereuses, l'état d'actionnement de l'au moins un élément de commutation de sécurité est acquis de manière répétitive par le premier (34) et le deuxième (35) processeurs ou circuits d'acquisition et l'état d'actionnement acquis dans les premiers et le cas échéant les deuxièmes télégrammes de données est codé.

7. Dispositif de commande selon la revendication 6, **caractérisé en ce qu'**au moins un élément de commutation de sécurité est réalisé avec plusieurs circuits électriques, plus particulièrement deux circuits électriques.

8. Dispositif de commande selon la revendication 7, **caractérisé en ce que** l'au moins un élément de commutation de sécurité est conçu comme un interrupteur d'arrêt d'urgence (38) identifié conformément aux normes, comme un interrupteur d'arrêt de machine identifié différemment, comme une touche de validation ou comme un sélecteur de mode de fonctionnement sécurisé.

9. Dispositif de commande mobile selon l'une des revendications 6 à 8, **caractérisé en ce que** plusieurs éléments de commutation de sécurité sont prévus.

10. Dispositif de commande selon la revendication 9, **caractérisé en ce que** plusieurs, plus particulièrement deux, éléments de commutation de sécurité sont équipés des mêmes fonctionnalités, dont les états d'actionnement sont acquis chacun par le premier (34) et le deuxième (35) processeurs ou circuits d'acquisition, les états d'actionnement acquis sont combinés logiquement, selon la fonction des éléments de commutation de sécurité par le premier (34) et le deuxième (35) processeurs ou circuits d'acquisition, en un état d'actionnement global, et cet état d'actionnement global est codé dans les premiers et le cas échéant les deuxièmes télégrammes de données.

11. Dispositif de commande mobile selon l'une des revendications 6 à 10, **caractérisé en ce que**, entre le premier (34) et le deuxième (35) processeur ou circuit d'acquisition, une liaison de signaux ou une liaison de données (42) est prévue, par l'intermédiaire de laquelle des informations sont transmises pour une comparaison croisée des différents états d'actionnement acquis de l'au moins élément de commutation de sécurité.

12. Dispositif de commande mobile selon l'une des revendications 1 à 11, **caractérisé en ce que** le dispositif de lecture (24) est conçu principalement pour l'acquisition simultanée de plusieurs codages de marquages différents, constituées d'un marquage de sélection (4), d'un marquage de zone (68) ou d'une marque-clé (5).

13. Dispositif de commande selon la revendication 12, **caractérisé en ce que** le dispositif de lecture (24) est conçu pour l'acquisition de plusieurs codages de sécurité, plus particulièrement d'un premier et d'un deuxième codage de sécurité différent du premier et le premier processeur ou circuit d'acquisition (34) et le deuxième processeur ou circuit d'acquisition (35) utilisent des codages de sécurité différents pour l'identification des télégrammes de données.

14. Dispositif de commande mobile selon l'une des revendications 1 à 13, **caractérisé en ce que** le dispositif de lecture (24) ne comprend aucun moyen d'enregistrement temporaire de données lues, ou bien de moyens limités, ce qui ne permet en aucun cas l'enregistrement complet d'un ensemble de données entier et muni d'informations de contrôle, qui contient un codage de marquage.

15. Dispositif de commande mobile selon l'une des revendications 1 à 14, **caractérisé en ce que** la mémoire (36) dans laquelle le codage de sécurité lu est enregistré et accessible, est conçue comme une mémoire volatile et, après l'extinction de l'appareil de commande, les codages de sécurité enregistrés sont effacés de manière irréversible.

16. Dispositif de commande mobile selon l'une des revendications 1 à 15, **caractérisé en ce que** le dispositif de lecture (24) présente une caractéristique d'acquisition ajustée.

17. Dispositif de commande mobile selon l'une des revendications 1 à 16, **caractérisé en ce que** le dispositif de lecture (24) est conçu comme un dispositif de réception à transpondeur.

18. Dispositif de commande mobile selon l'une des revendications 1 à 16, **caractérisé en ce que** le dispositif de lecture (24) est conçu comme un lecteur de code barre.

19. Dispositif de commande mobile selon l'une des revendications 1 à 16, **caractérisé en ce que** le dispositif de lecture (24) est conçu comme un récepteur de lumière pulsée ou modulée, plus particulièrement de la lumière infrarouge.

20. Dispositif de commande mobile selon l'une des revendications 1 à 19, **caractérisé en ce que** le dispositif de lecture (24) signale le soupassement d'une distance minimale par rapport à une marque-clé (5), un marquage de sélection (4) ou un marquage de zone (68) dans la zone d'acquisition ou génère des informations d'éloignement correspondantes.

21. Dispositif de commande mobile selon l'une des revendications 1 à 20, **caractérisé en ce que** le dispositif de lecture (24) signale le dépassement d'une distance maximale par rapport à une marque-clé (5), un marquage de sélection (4) ou un marquage de zone (68) dans la zone d'acquisition ou génère des informations d'éloignement correspondantes.

22. Dispositif de commande mobile selon l'une des revendications 1 à 21, **caractérisé en ce que** le premier (34) et le deuxième (35) processeurs ou circuits d'acquisition peuvent accéder au dispositif de lecture (24) indépendamment l'un de l'autre.

23. Dispositif de commande mobile selon l'une des revendications 1 à 22, **caractérisé en ce que** le premier (34) et le deuxième (35) processeurs ou circuits d'acquisition sont conçus de manières diverses et, le cas échéant, les moyens logiciels ou les combinaisons logiques programmées correspondants sont conçus de manières diverses.

24. Dispositif de commande mobile selon l'une des revendications 1 à 23, **caractérisé en ce qu'**au moins un moyen de sortie, plus particulièrement sous la forme d'un écran graphique (26), est prévu.

25. Dispositif de commande mobile selon l'une des revendications 1 à 24, **caractérisé en ce qu'**au moins un moyen d'entrée analogique ou quasi-analogique, plus particulièrement sous la forme d'un écran tactile (27), d'un joystick (29), d'un volant (30) ou d'un potentiomètre, est prévu.

26. Procédé d'exploitation pour l'exploitation en toute sécurité d'une liaison active technique de données temporaire d'un dispositif de commande mobile (2), avec au moins un élément de commande pour l'envoi de commandes de contrôle par un opérateur (1) vers au moins un circuit de sécurité d'un dispositif technique contrôlable (60) et, le cas échéant, vers une commande (10) d'un dispositif technique, moyennant quoi le dispositif de commande (2) comprend au moins une interface de données, pour l'établissement temporaire d'une liaison active technique de données avec une unité distante de transmission de données sécurisée (9) correspondant au dispositif technique contrôlable, en interposant au moins un moyen de transmission de données, plus particulièrement d'un système de bus ou d'un réseau sans attribution physique point par point garantie et univoque des sources et des puits de messages, et en interposant également une unité distante de transmission de données sécurisée (9) intégré de manière permanente dans le circuit de sécurité, moyennant quoi le dispositif de commande mobile (2) comprend en outre un premier processeur ou circuit d'acquisition (34) pour le codage d'informations, de messages ou d'états de signaux en une pluralité de premiers télégrammes de données, destinés à être transmis, par l'intermédiaire de la liaison active technique de données, à l'unité distante de transmission de données sécurisée (9), **caractérisé en ce que** le dispositif de commande mobile (2) comprend un deuxième processeur ou circuit d'acquisition (35) et un dispositif de lecture (24), moyennant quoi le dispositif de lecture est configuré principalement pour l'acquisition simultanée de plusieurs codages de marquages électroniques lisibles, conformément à plusieurs marquages de sélection (4), marquages de zones (68) ou maques-clés (5) se trouvant dans la zone d'acquisition du dispositif de lecture et des télégrammes de données sont générés par le premier processeur ou circuit d'acquisition (34) ainsi que par le deuxième processeur ou circuit d'acquisition (35), ces télégrammes de données sont identifiés par un codage de sécurité auparavant lu par un marquage de sélection (4), grâce à un accès par l'intermédiaire du dispositif de lecture (24), et enregistré dans le dispositif de commande (2), ou avec un identifiant de liaison vérifié et enregistré à l'aide du codage de sécurité lu, les télégrammes de données sont transmis à l'unité distante de transmission de données sécurisée (9), les télégrammes de données reçus sont vérifiés, dans l'unité distante de transmission des données sécurisée, en ce qui concerne une identification valable, conformément à un codage de sécurité enregistré dans la mémoire de l'unité distante de transmission des données sécurisée (9) et/ou conformément à un codage de liaison vérifié et enregistré à l'aide du codage de sécurité, et en cas de correspondance avec un codage de sécurité enregistré et/ou un codage de liaison enregistré, les signaux ou données sont ajustés pour le circuit de sécurité en fonction de la teneur en informations des télégrammes de données ou bien introduits dans le circuit de sécurité.

27. Procédé d'exploitation selon la revendication 26, **caractérisé en ce que** le premier (34) et le deuxième (35) processeurs ou circuits d'acquisition acquièrent de manière répétitive et indépendamment l'un de l'autre l'état de commutation d'un élément de commutation de sécurité se trouvant dans le dispositif de commande mobile (2), plus particulièrement d'un élément de commutation de sécurité réalisé avec plusieurs circuits électriques et le codent dans les télégrammes de données générés.

28. Procédé d'exploitation selon la revendication 26 ou 27, **caractérisé en ce que**, entre le premier (34) et le deuxième (35) processeur ou circuit d'acquisition, des informations ou des signaux pour la comparaison croisée concernant l'état de commutation, déterminé indépendamment, de l'élément de commutation de sécurité sont échangées, et prises en compte pour la détermination de l'état de commutation codé dans les télégrammes de données.

29. Procédé d'exploitation selon l'une des revendications 26 à 28, **caractérisé en ce que** le premier (34) et le deuxième (35) processeurs ou circuits d'acquisition génèrent et identifient indépendamment l'un de l'autre les télégrammes de données et ces télégrammes de données sont vérifiés dans l'unité distante de transmission des données (9) par un troisième (48) et un quatrième (49) processeurs ou circuits de surveillance correspondants et **en ce que**, au niveau du circuit de sécurité du dispositif technique contrôlable (60), un état non sûr est signalé dès que le troisième (48) ou le quatrième (49) processeur ou circuit de surveillance détecte un état non sûr à l'aide des télégrammes de données vérifiés.

30. Procédé d'exploitation selon l'une des revendications 26 à 29, **caractérisé en ce que**, entre le troisième (48) et le quatrième (49) processeur ou circuit de surveillance, des informations ou des signaux pour une comparaison croisée concernant l'état de sécurité déterminé à partir des télégrammes de données sont échangées (57) et pour lesquels les signaux ou données entrés dans le circuit de sécurité sont pris en compte.

31. Procédé d'exploitation selon l'une des revendications 26 à 30, **caractérisé en ce que**, lors de l'établissement des télégrammes de données dans le dispositif de commande mobile (2), des informations temporelles sont en outre intégrées et ces informations temporelles sont utilisées lors de la vérification de l'identification des télégrammes de données dans l'unité distante de transmission de données sécurisée (9) en tant que critère de vérification supplémentaire.

32. Procédé d'exploitation selon l'une des revendications 26 à 31, **caractérisé en ce que**, lors de l'établissement des télégrammes de données dans le dispositif de commande mobile (2), des informations séquentielles, plus particulièrement une numérotation continue, et ces informations séquentielles sont utilisées lors de la vérification de l'identification des télégrammes de données dans l'unité distante de transmission de données sécurisée (9) en tant que critère de vérification supplémentaire.

33. Procédé d'exploitation selon l'une des revendications 26 à 32, **caractérisé en ce que**, lors de l'établissement des télégrammes de données dans le dispositif de commande mobile (2), un codage d'appareil univoque attribuée, de manière individuelle, au dispositif de commande est en outre intégré et ce codage d'appareil est utilisé utilisées lors de la vérification de l'identification des télégrammes de données dans l'unité distante de transmission de données sécurisée (9) en tant que critère de vérification supplémentaire.

34. Procédé d'exploitation selon l'une des revendications 26 à 33, **caractérisé en ce que**, à l'arrivée d'un télégramme de données valide identifié dans l'unité distante de transmission de données sécurisée (9) avec des informations concernant l'état d'actionnement d'une touche de validation du dispositif de commande mobile (2), un timer avec un temps de fonctionnement défini est redémarré et lors de l'écoulement du temps du timer, un état de signal ou bien une valeur de donnée est ajustée pour l'intégration dans le circuit de sécurité de façon à ce qu'une touche de validation non actionnée soit signalée.

35. Procédé d'exploitation selon l'une des revendications 26 à 34, **caractérisé en ce que**, à l'arrivée d'un télégramme de données valide identifié dans l'unité distante de transmission de données sécurisée (9) avec des informations concernant l'état d'actionnement d'un interrupteur d'arrêt d'urgence ou d'un interrupteur d'arrêt du dispositif de commande mobile (2), un timer avec un temps de fonctionnement défini est redémarré et lors de l'écoulement du temps du timer, un état de signal ou bien une valeur de donnée est ajustée pour l'intégration dans le circuit de sécurité de façon à ce qu'un interrupteur d'arrêt d'urgence ou un interrupteur d'arrêt actionné soit signalé.

36. Procédé d'exploitation selon l'une des revendications 26 à 35, **caractérisé en ce que**, à l'arrivée d'un télégramme de données valide identifié dans l'unité distante de transmission de données sécurisée (9) avec des informations concernant l'état d'actionnement d'un sélecteur de mode de fonctionnement du dispositif de commande mobile (2), un timer avec un temps de fonctionnement défini est redémarré et lors de l'écoulement du temps du timer, un état de signal ou bien une valeur de donnée est ajustée pour l'intégration dans le circuit de sécurité de façon à ce qu'une sélection de mode de fonctionnement non valide soit signalée.

37. Procédé d'exploitation selon l'une des revendications 26 à 36, **caractérisé en ce que** les marquages de zones (68) se trouvant dans la zone d'acquisition du dispositif de lecture sont acquis, les codages de zones qui y sont encodés sont lus, les codages de zones sont vérifiés en ce qui concerne leur appartenance à une zone de travail admissible enregistrée dans le dispositif de commande mobile (2) ou dans l'unité distante de transmission des données sécurisée (9) et, si une non-appartenance de tous les codages de zones acquis est détectée et dans le cas où aucun codage de zone ne peut être acquis, l'exécution de commandes de contrôle critiques pour la sécurité est interdite.

38. Unité distante de transmission de données sécurisée, configurée pour une utilisation dans un procédé d'exploitation selon l'une des revendications 26 à 37, pour l'accouplement technique de données temporaire et sécurisé d'un dispositif de commande mobile (2) au moins au circuit de sécurité d'un dispositif technique contrôlable (60) et, le cas échéant, à la commande du dispositif technique, avec une première interface de données pour l'établissement d'une liaison active technique de données avec un dispositif de commande mobile (2), en interposant au moins un moyen de transmission de données sans attribution physique univoque garantie point à point des participants, avec une ou plusieurs interfaces de sécurité pour une intégration de l'unité de transmission de données sécurisée dans le circuit de sécurité du dispositif technique (60), avec un premier processeur ou circuit de surveillance (48) pour la réception d'une pluralité de premiers télégrammes de données par l'intermédiaire de la première interface de données et un deuxième processeur ou circuit de surveillance (49) pour la réception simultanée d'une pluralité de premiers télégrammes de données et/ou, le cas échéant, pour la réception d'une pluralité de deuxièmes télégrammes de données par l'intermédiaire de la première interface de données, **caractérisée en ce que**, au premier (48) et deuxième (49) processeur ou circuit de surveillance, sont attribués des mémoires accessibles dans lesquelles au moins un code de sécurité admissible enregistré est mémorisé, ce code de sécurité étant attribué à un marquage de sélection (4) ou un marquage de zone (68) correspondant spatialement au dispositif technique contrôlable (60) ou attribué à une marque-clé (5) allouée à l'opérateur (1), le premier (48) et le deuxième (49) processeurs ou circuits de surveillance vérifient, indépendamment l'un de l'autre, les premiers et deuxième télégrammes de données reçus en ce qui concerne l'identification unique à l'aide d'un code de marquage attribué au code de sécurité admissible enregistré et, en cas de correspondance avec un code de sécurité admissible enregistré, analyse les informations ou messages des télégrammes de données reçus et établissent, via au moins une interface de données, les états de signaux ou les données pour le circuit de sécurité en fonction des informations ou messages ou les introduisent dans le circuit de sécurité.

39. Unité distante de transmission de données sécurisée selon la revendication 38, **caractérisée en ce que** les mémoires accessibles sont conçues, au moins partiellement, comme des mémoires non volatiles (45) et dans lesquelles l'au moins un codage de sécurité admissible enregistré est enregistré de manière permanente ou quasi-permanente.

40. Unité distante de transmission de données sécurisée selon la revendication 38 ou 39, **caractérisée en ce qu'**une deuxième interface de données (47) est prévue avec la commande fonctionnelle (10) du dispositif technique (60) pour l'accouplement technique des données.

41. Unité distante de transmission de données sécurisée selon la revendication 38 ou 39, **caractérisée en ce que** la deuxième interface de données (47) est conçue pour l'établissement d'une liaison de données point à point sécurisée avec la commande (10) du dispositif technique (60).

42. Unité distante de transmission de données sécurisée selon l'une des revendications 38 à 41, **caractérisée en ce que** l'unité de transmission des données est combinable, en ce qui concerne la construction, avec la commande fonctionnelle (10) du dispositif technique (60), plus particulièrement insérable en tant que module dans le boîtier de la commande ou encastrable sur le boîtier de la commande.

43. Unité distante de transmission de données sécurisée selon l'une des revendications 38 à 41, **caractérisée en ce que** l'unité de transmission des données est intégrée, en ce qui concerne la construction et fonctionnellement, dans la commande fonctionnelle (10) du dispositif technique (60).

44. Unité distante de transmission de données sécurisée selon l'une des revendications 38 à 43, **caractérisée en ce que** l'unité distante de transmission des données est combinée, en ce qui concerne la construction et fonctionnellement, avec une unité distante radio (3).

45. Unité distante de transmission de données sécurisée selon l'une des revendications 38 à 44, **caractérisée en ce que** l'unité distante de transmission des données est combinée, en ce qui concerne la construction et fonctionnellement, avec un marquage de sélection (4).

46. Unité distante de transmission de données sécurisée selon l'une des revendications 38 à 45, **caractérisée en ce que** l'interface de sécurité destinée à être intégrée dans le circuit de sécurité du dispositif technique comprend un système à contacts réalisé avec plusieurs circuits pour l'introduction d'un état de signal de la touche de validation, d'un état de signal d'arrêt d'urgence ou d'arrêt et/ou d'un état de signal du mode de fonctionnement.

47. Unité distante de transmission de données sécurisée selon l'une des revendications 38 à 46, **caractérisée en ce que** l'interface de sécurité destinée à être intégrée dans le circuit de sécurité présente, au lieu ou en plus du système à contacts à plusieurs circuits, des sorties de signaux à plusieurs circuits avec potentiel.

48. Unité distante de transmission de données sécurisée selon l'une des revendications 38 à 42, **caractérisée en ce que** l'interface de sécurité destinée à être intégrée dans le circuit de sécurité du dispositif technique est conçue pour la liaison à un bus de sécurité.

49. Unité distante de transmission de données sécurisée selon l'une des revendications 38 à 48, **caractérisée en ce que**, entre le premier (48) et le deuxième (49) processeur ou circuit de surveillance, une liaison de signal ou de données est prévue, par l'intermédiaire de laquelle des informations peuvent être échangées pour une comparaison croisée des informations ou messages analysés à partir des premiers et, le cas échéant, des deuxièmes télégrammes de données.

50. Unité distante de transmission de données sécurisée selon l'une des revendications 38 à 49, **caractérisée en ce que** le premier (48) et le deuxième (49) processeurs ou circuits de surveillance sont conçus de manières diverses et, le cas échéant, les moyens logiciels ou les combinaisons logiques programmées correspondants sont conçus de manières diverses.

51. Unité distante de transmission de données sécurisée selon l'une des revendications 38 à 50, **caractérisée en ce que** le premier (48) et le deuxième (49) processeurs ou circuits de surveillance peuvent signaler, entièrement indépendamment l'un de l'autre, au niveau de l'interface de sécurité, un état non sécurisé, plus particulièrement une validation manquante ou un état d'arrêt d'urgence ou d'arrêt de machine déclenché.

52. Unité distante de transmission de données sécurisée selon l'une des revendications 38 à 51, **caractérisée en ce que** la première interface de données est conçue comme une interface radio (46), plus particulièrement comme une interface Bluetooth, une interface WLAN ou une interface ZigBee.

53. Unité distante de transmission de données sécurisée selon l'une des revendications 38 à 52, **caractérisée en ce que**, dans l'état désactivé ou non alimenté de l'unité distante de transmission des données sécurisée pour le circuit de sécurité, une touche de validation non actionnée, un interrupteur d'arrêt d'urgence ou un interrupteur d'arrêt ou une sélection non valide d'un mode de fonctionnement est signalé.
